# EUROPEAN PATENT SPECIFICATION

(11) **EP 4 501 862 B1**
(45) Date of publication and mention of the grant of the patent: **08.04.2026**
(21) Application number: 24192711.0
(22) Date of filing: 02.08.2024
(51) Int. Cl.: C01G 53/50, H01M 4/525, H01M 4/505

(54) **POSITIVE ELECTRODE ACTIVE MATERIAL, POSITIVE ELECTRODE, AND RECHARGEABLE LITHIUM BATTERIES**
POSITIVELEKTRODENAKTIVMATERIAL, POSITIVELEKTRODE UND WIEDERAUFLADBARE LITHIUMBATTERIEN
MATÉRIAU ACTIF D'ÉLECTRODE POSITIVE, ÉLECTRODE POSITIVE ET BATTERIES AU LITHIUM RECHARGEABLES

(30) Priority: 03.08.2023 KR 20230101767
(43) Date of publication of application: 05.02.2025
(73) Proprietor: SAMSUNG SDI CO., LTD., Giheung-gu Yongin-si, Gyeonggi-do 17084 (KR)
(72) Inventor: KIM, Young-Ki, 17084 Yongin-si (KR); CHOO, Sung Ho, 17084 Yongin-si (KR); KONG, Youngsun, 17084 Yongin-si (KR); KANG, Seok Mun, 17084 Yongin-si (KR); YOON, Jaesang, 17084 Yongin-si (KR); DOO, Sungwook, 17084 Yongin-si (KR); KANG, Gwiwoon, 17084 Yongin-si (KR); JUN, Dowook, 17084 Yongin-si (KR); KANG, Byungwuk, 17084 Yongin-si (KR); JEONG, Jaeyong, 17084 Yongin-si (KR)
(74) Representative: Marks & Clerk LLP

(56) References cited:
- EP-A1- 4 071 846
- EP-B1- 2 498 323
- US-A1- 2009 217 513
- US-A1- 2010 248 038
- US-A1- 2010 320 972
- US-A1- 2016 093 877

## Description

### BACKGROUND

### 1. Field

Embodiments of the present disclosure described herein are related to positive electrode active materials, positive electrodes, and rechargeable lithium batteries.

### 2. Description of the Related Art

A portable information device such as a cell phone, a laptop, smart phone, and/or the like and/or a vehicle (e.g., an electric vehicle, a hybrid vehicle, etc.) has utilized a rechargeable lithium battery having relatively high energy density and relatively easy portability as a driving power source for the portable information device and/or the vehicle. Recently, research has been actively conducted to utilize a rechargeable lithium battery with relatively high energy density as a driving power source for hybrid or electric vehicles and/or a power storage power source (e.g., for a power wall).

Various positive electrode active materials have been investigated to realize rechargeable lithium batteries for applications to the uses. Among them, lithium nickel-based oxide, lithium nickel manganese cobalt composite oxide, lithium nickel cobalt aluminium composite oxide, and/or lithium cobalt oxide are mainly utilized as positive electrode active materials. EP 4 071 846 A1 is directed to a positive electrode material for a secondary battery that comprises a first lithium nickel-cobalt - manganese transition metal oxide being polycrystalline and a second lithium nickel-cobalt-manganese transition metal oxide being in form of single crystals.

However, while the demands for large-sized, high-capacity, or high-energy-density rechargeable lithium batteries have recently increased, the supply of a positive electrode active material containing cobalt, a rare metal, is expected to be severely short (e.g., to be in short supply). In other words, because the cobalt is expensive and lacks remaining or substantial reserves, there is a need or desire of developing a positive electrode active material excluding the use of cobalt or utilizing it in a reduced amount.

### SUMMARY

Aspects according to one or more embodiments are directed toward a positive electrode active material including a lithium nickel-manganese-based composite oxide, which innovatively reduces a price of the positive electrode active material while securing high capacity and high energy density characteristics, and improves high voltage performance by suppressing or reducing side reactions with an electrolyte at high voltage, and a positive electrode and a rechargeable lithium battery including the same.

Aspects according to one or more embodiments are directed toward a positive electrode active material that maximizes capacity while minimizing or reducing production cost, ensures long cycle-life characteristics, and suppresses side reactions with electrolyte at high voltage. A rechargeable lithium battery utilizing the positive electrode active material can exhibit high initial charge/discharge capacity and efficiency even under high-voltage operating conditions and can achieve long cycle-life characteristics.

Additional aspects will be set forth in part in the description which follows and, in part, will be apparent from the description, or may be learned by practice of the presented embodiments of the present disclosure.

The present invention is directed to a positive electrode active material including a first positive electrode active material including a lithium nickel-manganese-based composite oxide having a nickel content (e.g., amount) of greater than or equal to 60 mol%, and a cobalt content of 0 mol% to 0.01 mol%, based on 100 mol% of a total metal excluding lithium and including (e.g., being in a form of) secondary particles (e.g., each) made by agglomerating a plurality of primary particles wherein an average particle diameter (D₅₀) of the secondary particles is 10 µm to 20 µm, a second positive electrode active material including a lithium nickel-manganese-based composite oxide having a nickel content (e.g., amount) of greater than or equal to 60 mol%, and a cobalt content of 0 mol% to 0.01 mol%, based on 100 mol% of a total metal excluding lithium and including (e.g., being in a form of) single particles (e.g., each being a monolithic particle) wherein an average particle diameter (D₅₀) of the single particles is 2 µm to 8 µm, and a third positive electrode active material including (e.g., being in a form of) particles including lithium transition metal phosphate.

In some embodiments, a positive electrode includes a positive electrode current collector and a positive electrode active material layer on the positive electrode current collector, wherein the positive electrode active material layer includes the aforementioned positive electrode active material.

In some embodiments, a rechargeable lithium battery includes the positive electrode, a negative electrode, and an electrolyte.

At least some of the above and other features of the invention are set out in the claims.

### BRIEF DESCRIPTION OF DRAWINGS

FIG. 1 is a cross-sectional view schematically showing a rechargeable lithium battery according to some embodiments.
FIG. 2 is a scanning electron microscopy (SEM) image of the first positive electrode active material of Example 1.
FIG. 3 is an SEM image of the second positive electrode active material of Example 1.
FIG. 4 is an SEM image of the third positive electrode active material of Example 1.
FIG. 5 is an SEM image of the third positive electrode active material of Example 2.

### DETAILED DESCRIPTION

Hereinafter, specific embodiments will be described in more detail so that those of ordinary skill in the art can easily implement them. However, this disclosure may be embodied in many different forms and is not construed as limited to the example embodiments set forth herein.

The terminology utilized herein is utilized to describe embodiments only, and is not intended to limit the present disclosure. The singular expression includes the plural expression unless the context clearly dictates otherwise.

As utilized herein, "combination thereof" refers to a mixture, a laminate, a composite, a copolymer, an alloy, a blend, a reaction product, and/or the like of the constituents.

Herein, it should be understood that terms such as "comprises," "includes," or "have" are intended to designate the presence of an embodied aspect, number, operation, element, and/or a (e.g., any suitable) combination thereof, but it does not preclude the possibility of the presence or addition of one or more other features, numbers, operations, elements, and/or a (e.g., any suitable) combination thereof.

As used herein, expressions such as "at least one of", "one of", and "selected from", when preceding a list of elements, modify the entire list of elements and do not modify the individual elements of the list. For example, "at least one of a, b or c", "at least one selected from a, b and c", etc., may indicate only a, only b, only c, both (e.g., simultaneously) a and b, both (e.g., simultaneously) a and c, both (e.g., simultaneously) b and c, all of a, b, and c, or variations thereof.

In the drawings, the thickness of layers, films, panels, regions, and/or the like, are exaggerated for clarity and like reference numerals designate like elements throughout, and duplicative descriptions thereof may not be provided in the specification. It will be understood that if (e.g., when) an element such as a layer, film, region, or substrate is referred to as being "on" another element, it can be directly on the other element or intervening elements may also be present. In other examples, if (e.g., when) an element is referred to as being "directly on" another element, there are no intervening elements present.

In one or more embodiments, "layer" herein includes not only a shape formed on the whole surface if (e.g., when) viewed from a plan view, but also a shape formed on a partial surface.

"Group" refers to a group of the Periodic Table of Elements according to the International Union of Pure and Applied Chemistry ("IUPAC") Groups 1-18 grouping system.

In one or more embodiments, the average particle diameter may be measured by a method suitable to those skilled in the art, for example, by a particle size analyzer, or by a transmission electron microscopic image or a scanning electron microscopic image. In one or more embodiments, it is possible to obtain an average particle diameter value by measuring utilizing a dynamic light scattering method, performing data analysis, counting the number of particles for each particle size range, and calculating from this. Unless otherwise defined, the average particle diameter may refer to the diameter (D₅₀) of particles having a cumulative volume of 50 volume% in the particle size distribution. As utilized herein, if (e.g., when) a definition is not otherwise provided, the average particle diameter refers to a diameter (D₅₀) of particles having a cumulative volume of 50 volume% in the particle size distribution that is obtained by measuring the size (diameter or length of the major axis) of about 20 particles at random in a scanning electron microscopic image. In the present specification and unless defined otherwise, when particles are spherical, "diameter" indicates a particle diameter or an average particle diameter, and when the particles are non-spherical, the "diameter" indicates a major axis length or an average major axis length.

Herein, "or" is not to be construed as an exclusive meaning, for example, "A or B" is construed to include A, B, A+B, and/or the like.

"Metal" is interpreted as a concept including ordinary metals, transition metals and metalloids (semi-metals).

As utilized herein, the term "substantially" and similar terms are utilized as terms of approximation and not as terms of degree, and are intended to account for the inherent deviations in measured or calculated values that would be recognized by those of ordinary skill in the art. Also, the term "about" and similar terms, when utilized herein in connection with a numerical value or a numerical range, are inclusive of the stated value and a value within an acceptable range of deviation for the particular value as determined by one of ordinary skill in the art, considering the measurement in question and the error associated with measurement of the particular quantity (e.g., the limitations of the measurement system). For example, "about" may refer to within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

Hereinafter, positive electrode active materials and rechargeable lithium batteries according to example embodiments will be described in more detail.

### Positive Electrode Active Material

The positive electrode active material of the invention includes a first positive electrode active material including a lithium nickel-manganese-based composite oxide having a nickel content (e.g., amount) of greater than or equal to 60 mol%, and a cobalt content of 0 mol% to 0.01 mol%, based on 100 mol% of a total metal excluding lithium and including (e.g., being in a form of) secondary particles (e.g., each) made by agglomerating a plurality of primary particles wherein an average particle diameter (D₅₀) of the secondary particles is 10 µm to 20 µm, a second positive electrode active material including a lithium nickel-manganese-based composite oxide having a nickel content (e.g., amount) of greater than or equal to 60 mol%, and a cobalt content of 0 mol% to 0.01 mol%, based on 100 mol% of a total metal excluding lithium and including (e.g., being in a form of) single particles (e.g., each being a monolithic particle) wherein an average particle diameter (D₅₀) of the single particles is 2 µm to 8 µm, and a third positive electrode active material including (e.g., in a form of) particles including lithium transition metal phosphate.

As the price of cobalt, a rare metal, has recently risen sharply, there is a demand for the development of positive electrode active materials that exclude cobalt or reduce its content (e.g., amount). Among them, a spinel crystal structure such as lithium manganese oxide (LMO) and/or the like has a limitation in realizing high capacity due to small available lithium capacity within the structure. The layered nickel-manganese positive electrode active material has excellent or suitable capacity and efficiency characteristics due to the high available lithium capacity in the structure, making it suitable as a material for high-capacity batteries. However, as cobalt, which plays a key role in the layered structure, is removed, structural stability decreases, resistance increases, and it becomes difficult to secure long cycle-life characteristics. In one or more embodiments, the layered nickel-manganese positive electrode active material, from which cobalt is excluded, may rather have a problem of accelerated side reaction with an electrolyte under high voltage and high temperature conditions, resultantly increasing gas generation and deteriorating cycle-life characteristics.

The first positive electrode active material including the lithium nickel-manganese-based composite oxide including (e.g., being in the form of) secondary particles with a size of 10 micrometer (µm) to 20 µm is mixed with the second positive electrode active material including the lithium nickel-manganese-based composite oxide including (e.g., being in the form of) single particles with a size of 2 µm to 8 µm, and the third positive electrode active material including the lithium transition metal phosphate, which is a low-cost material, is added thereto, to propose a positive electrode active material exhibiting improved high voltage performance as well as realizing high capacity, high energy density, and long cycle-life characteristics.

An average particle diameter (D₅₀) of the secondary particles of the first positive electrode active material is larger than that of the single particles of the second positive electrode active material. Herein, the first positive electrode active material may be expressed as large particles, while the second positive electrode active material may be expressed as small particles. The average particle diameter (D₅₀) of the single particles of the second positive electrode active material may be larger than that of the third positive electrode active material. The large particles in the form of secondary particles and the small particles in the form of single particles are appropriately mixed as the lithium nickel-manganese-based oxide and then, additionally mixed with the lithium transition metal phosphate to maximize or increase capacity and energy density and improve high-voltage characteristics.

Herein, the average particle diameter refers to a diameter (D₅₀) of particles having a cumulative volume of 50 volume% in the particle size distribution that is obtained by measuring the size (diameter or length of the major axis) of about 20 particles at random in a scanning electron microscopic image for positive electrode active materials.

The average particle diameter (D₅₀) of the secondary particles of the first positive electrode active material may be, for example, 10 µm to about 18 µm, or about 12 µm to about 16 µm. The average particle diameter (D₅₀) of the single particles of the second positive electrode active material may be, for example, 2 µm to about 7 µm, about 2.5 µm to about 6 µm, or about 3 µm to about 5 µm. The particles of the third positive electrode active material may be a type or kind of primary particle, and their average particle diameter (D₅₀) may be, for example, 10 nm to 2 µm, for example, about 50 nm to about 1.5 µm, about 100 nm to about 1.0 µm, about 100 nm to 900 nm, or about 100 nm to about 600 nm. If the average particle diameter of each positive electrode active material satisfies the above ranges, high capacity may be achieved and energy density may be maximized or increased.

Based on a total of 100 wt% of the first, second, and third positive electrode active materials, the first positive electrode active material may be included in an amount of 60 wt% to 90 wt%, the second positive electrode active material may be included in an amount of 5 wt% to 35 wt%, and the third positive electrode active material may be included in an amount of 5 wt% to 35 wt%. As a specific example, the first positive electrode active material may be included in an amount of 60 wt% to about 85 wt%, the second positive electrode active material may be included in an amount of about 10 wt% to about 25 wt%, and the third positive electrode active material may be included in an amount of 5 wt% to about 20 wt%. If the mixing ratio of each positive electrode active material satisfies the above ranges, energy density may be further increased while increasing capacity.

The lithium nickel-manganese-based composite oxide of the first positive electrode active material and the lithium nickel-manganese-based composite oxide of the second positive electrode active material may be the same or different from each other. In each lithium nickel-manganese-based composite oxide, a nickel content (e.g., amount) is greater than or equal to 60 mol%, for example, 60 mol% to about 80 mol%, about 65 mol% to about 80 mol%, about 70 mol% to about 80 mol%, 60 mol% to about 79 mol%, 60 mol% to about 78 mol%, or 60 mol% to about 75 mol% based on 100 mol% of a total metal excluding lithium in the lithium nickel-manganese-based composite oxide. If the nickel content (e.g., amount) satisfies the above ranges, high capacity can be achieved and structural stability can be increased even if the cobalt content (e.g., amount) is reduced.

For example, a manganese content (e.g., amount) may be, for example, about 10 mol% to about 40 mol%, for example, about 10 mol% to about 39 mol%, about 10 mol% to about 35 mol%, about 10 mol% to about 30 mol%, about 10 mol% to about 29 mol%, about 15 mol% to about 39 mol%, about 20 mol% to about 39 mol%, or about 20 mol% to about 30% based on about 100 mol% of a total metal excluding lithium in the lithium nickel-manganese-based composite oxide. If the manganese content (e.g., amount) satisfies the above ranges, the positive electrode active material may improve structural stability while realizing high capacity.

In each of the first and second positive electrode active materials, the lithium nickel-manganese composite oxide may be a lithium nickel-manganese-aluminium-based composite oxide that further includes aluminium in addition to nickel and manganese. When the composite oxide includes aluminium, it is advantageous to maintain a stable layered structure even if the cobalt element is excluded from the structure. The aluminium content (e.g., amount) in the lithium nickel-manganese-aluminium-based composite oxide may be greater than or equal to about 0.1 mol%, greater than or equal to about 0.5 mol%, or greater than or equal to about 1 mol%, for example, 1 mol% to 3 mol%, 1 mol% to about 2.5 mol%, 1 mol% to about 2 mol%, or 1 mol% to about 1.9 mol% based on 100 mol% of a total metal excluding lithium in the first positive electrode active material. If the aluminium content (e.g., amount) satisfies the above ranges, a stable layered structure may be maintained even if cobalt is excluded, the problem of structure collapse due to charging and discharging may be suppressed or reduced, and long cycle-life characteristics of the positive electrode active material may be realized.

The lithium nickel-manganese-based composite oxide of the first positive electrode active material and the lithium nickel-manganese-based composite oxide of the second positive electrode active material may each independently be represented by Chemical Formula 1.

Chemical Formula 1 Liₐ₁Niₓ₁Mn_{y1}Al_{z1}M¹_{w1}O_{2-b1}X_{b1}

In Chemical Formula 1, 0.9≤a1≤1.8, 0.6≤x1≤0.8, 0.1≤y1≤0.4, 0≤z1≤0.03, 0 ≤w1≤0.3, 0.9≤x1+y1+z1+w1≤1.1, and 0≤b1≤0.1, M¹ is one or more elements of (e.g., selected from among) B, Ba, Ca, Ce, Cr, Fe, Mg, Mo, Nb, Si, Sn, Sr, Ti, V, W, Y, and/or Zr, and X is one or more elements of (e.g., selected from among) F, P, and/or S.

In Chemical Formula 1, for example, 0.9≤a1≤1.5, or 0.9≤a1≤1.2. Additionally, Chemical Formula 1 may contain aluminium, in which case 0.6≤x1≤0.8, 0.1≤y1≤0.39, 0.01≤z1≤0.03, and 0≤w1≤0.29 may be satisfied, and, for example, 0.6≤ x1≤0.8, 0.1≤y1≤0.39, 0.01<z1≤0.03, and 0≤w1≤0.29 may be satisfied.

In Chemical Formula 1, for example, 0.6≤x1≤0.79, 0.6≤x1≤0.78, 0.6≤x1≤ 0.75, 0.65≤x1≤0.8, or 0.7≤x1≤0.79; 0.1≤y1≤0.35, 0.1≤y1≤0.30, 0.1≤y1≤0.29, 0.15≤ y1≤0.39, or 0.2≤y1≤0.3; 0.01≤z1≤0.025, 0.01<z1≤0.02, or 0.01<z1≤0.019; and 0≤w1 ≤0.28, 0≤w1≤0.27, 0≤w1≤0.26, 0≤w1≤0.25, 0≤w1≤0.24, 0≤w1≤0.23, 0≤w1≤0.22, 0 ≤w1≤0.21, 0≤w1≤0.2, 0≤w1≤0.15, 0≤w1≤0.1, or 0≤w1≤0.09.

The lithium nickel-manganese-based composite oxide is a cobalt-free compound that does not include cobalt or includes a very small amount of cobalt. For example, the lithium nickel-manganese-based composite oxide of the first positive electrode active material and the lithium nickel-manganese-based composite oxide of the second positive electrode active material each independently have a cobalt content (e.g., amount) of 0 mol% to 0.01 mol% based on about 100 mol% of a total metal excluding lithium.

### First Positive Electrode Active Material

In some embodiments, the secondary particles of the first positive electrode active material, which exclude a coating layer, may include aluminium at a substantially uniform concentration. In other words, the aluminium is uniformly (substantially uniformly) dispersed in the particles without a concentration gradient from the center of each of the particles to the surface or without a concentration difference inside and outside the particle. Accordingly, the positive electrode active material may be prepared by not additionally doping the aluminium but utilizing an aluminium raw material to prepare a precursor, wherein the nickel-manganese-aluminium-based hydroxide may be utilized as the precursor and synthesize a composite oxide. In other words, an aluminium content (e.g., amount) inside primary particles may be equal or similar regardless of locations of the primary particles. If a primary particle is selected at a random position in the cross section of a secondary particle and the aluminium content (e.g., amount) is measured inside the primary particle rather than at its interface, regardless of the location of the primary particle, that is, whether the primary particle is close to the center of the secondary particle or close to the surface, the aluminium content (e.g., amount) may be the same/similar/substantially uniform. In this structure, a stable layered structure can be maintained even if cobalt is absent or is present in a very small amount, and aluminium by-products or aluminium aggregates are not generated, so that the capacity, efficiency, and cycle-life characteristics of the positive electrode active material can be improved at the same time.

The first positive electrode active material according to some embodiments may further include a coating layer containing aluminium and zirconium on the surface of the secondary particle. The first positive electrode active material may include an aluminium-zirconium-rich layer on the surface to effectively suppress or reduce a side reaction with an electrolyte solution at a high voltage and thereby, improve capacity and cycle-life characteristics at the high voltage.

The coating layer of the first positive electrode active material may have an aluminium content (e.g., amount) of 0.1 mol% to 2 mol% based on 100 mol% of a total metal excluding lithium, and the coating layer may have a zirconium content (e.g., amount) of 0.05 mol% to 1 mol%. In the first positive electrode active material, the coating layer may have an aluminium content (e.g., amount) of, for example, about 0.2 mol% to about 1.9 mol%, about 0.3 mol% to about 1.8 mol%, about 0.5 mol% to about 1.5 mol%, or about 0.8 mol% to about 1.3 mol%. The aluminium or zirconium content (e.g., amount) in the coating layer can be measured, for example, through SEM-EDS analysis of the surface or cross-section of the positive electrode active material. If the aluminium content (e.g., amount) in the coating layer satisfies the ranges, the coating layer may be formed to have a substantially uniform and thin thickness, which may not increase resistance of the positive electrode active material and effectively suppress or reduce a side reaction with an electrolyte, improving cycle-life characteristics of a rechargeable lithium battery at a high voltage.

In the first positive electrode active material, the zirconium content (e.g., amount) of the coating layer may be, for example, about 0.1 mol% to 1 mol%, about 0.1 mol% to about 0.9 mol%, about 0.1 mol% to about 0.8 mol%, or about 0.1 mol% to about 0.6 mol%. If the zirconium content (e.g., amount) satisfies the ranges, a satisfactory coating layer may be formed without deteriorating capacity of the positive electrode active material or increasing resistance and effectively suppressing or reducing the side reaction with the electrolyte, additionally improving capacity characteristics and cycle-life characteristics under high-voltage operating conditions.

The coating layer of the first positive electrode active material may further include yttrium in addition to the aluminium and zirconium, wherein a content (e.g., amount) of the yttrium may be 0.05 mol% to 1 mol% or about 0.1 mol% to 1 mol% based on 100 mol% of a total metal excluding lithium of the first positive electrode active material.

The coating layer of the first positive electrode active material may include (e.g., be in a form of) a film that continuously surrounds the surface of the secondary particle, for example, may include (e.g., be in a form of) a shell that surrounds the entire surface of the secondary particle. This is distinct from a structure in which only a portion of the surface of the secondary particle is partially coated. According to some embodiments, the coating layer may be formed to entirely cover the surface of the secondary particle and may be formed to be very thin and substantially uniform in thickness, and therefore the positive electrode active material does not increase resistance or decrease capacity, improves structural stability, effectively suppresses side reactions with electrolytes, reduces the amount of gas generated under high-voltage and high-temperature conditions, and achieves long cycle-life characteristics.

A thickness of the coating layer of the first positive electrode active material may be 30 nanometers (nm) to 500 nm, for example, 30 nm to about 450 nm, 30 nm to about 400 nm, 30 nm to about 350 nm, 30 nm to about 300 nm, 30 nm to about 250 nm, 30 nm to about 200 nm, 30 nm to about 150 nm, about 50 nm to 500 nm, about 80 nm to 500 nm, or about 100 nm to 500 nm. When the coating layer satisfies the thickness ranges, the structural stability of the positive electrode active material may be improved without increasing resistance or reducing capacity due to the coating, and the side reaction with the electrolyte may be effectively suppressed or reduced. The thickness of the coating layer may be measured through, for example, TOF-SIMS, XPS, or EDS analysis, and the thickness range of the coating layer may be measured through TEM-EDS line profile.

The coating layer of the first positive electrode active material may be thin and substantially uniform in thickness, at the level of tens to hundreds of nanometers. For example, the deviation in coating layer thickness within one positive electrode active material particle may be less than or equal to about 20%, less than or equal to about 18%, or less than or equal to about 15%. Herein, the deviation in coating layer thickness refers to the deviation of the coating layer thickness within one positive electrode active material particle. For example, the deviation of the coating layer thickness may be calculated by measuring the thickness of about 10 points in an electron microscopic image of the cross-section of a single positive electrode active material particle to calculate an arithmetic average, and then dividing the absolute value of the difference between one data and the arithmetic mean value by the arithmetic mean value and multiplying by 100. The fact that the deviation or standard deviation of the coating layer thickness may satisfy the above range refers to that a coating layer of substantially uniform thickness is well formed in a form of a film on the surface of the positive electrode active material particle. Accordingly, the structural stability of the positive electrode active material is improved, side reactions with the electrolyte are effectively suppressed or reduced, and the increase in resistance or decrease in capacity due to coating can be minimized or reduced.

In one or more embodiments, during the coating layer formation process, aluminium may diffuse into the secondary particles. Accordingly, the positive electrode active material according to some embodiments may further include a grain boundary coating portion including aluminium and arranged on the surface of the primary particles in the internal portion of the secondary particles. The internal portion of the secondary particle may refer to the entire internal portion excluding the surface of the secondary particle, or may be a region from the surface of the secondary particle to the center of the secondary particle, up to about 60 length% of the radius. The grain boundary coating is a concept that is distinct from the coating layer on the surface of the secondary particle, and refers to the coating portion formed on the surface of the primary particles inside the secondary particle. The presence of a grain boundary coating portion can be confirmed through SEM-EDS analysis of the cross-section of the positive electrode active material. By forming (or providing) the aluminium grain boundary coating portion, the positive electrode active material can become more structurally stable and its cycle-life characteristics can be improved.

The aluminium content (e.g., amount) in the grain boundary coating portion is not particularly limited, and, for example, the aluminium content (e.g., amount) in the grain boundary coating portion may be less than the aluminium content (e.g., amount) in the coating layer.

In contrast, the aluminium content (e.g., amount) of the coating layer of the first positive electrode active material may be larger than that of the coating layer of the second positive electrode active material, which will be described in more detail later. For example, the aluminium content (e.g., amount) of the coating layer of the first positive electrode active material and the aluminium content (e.g., amount) of the coating layer of the second positive electrode active material may have a molar ratio of about 5:1 to about 2:1 or about 4:1 to about 2:1. Herein, the aluminium of the coating layer in the first and second positive electrode active materials may not work as resistance and maximize or increase capacity and cycle-life characteristics at a high voltage as well as improve structural stability of each layer.

### Second Positive Electrode Active Material

The single particle of the second positive electrode active material refers to it as existing alone without a grain boundary within the particle, being composed of one particle, and having a single particle, a monolith structure, a one body structure, or a non-agglomerated particle, in which particles are not agglomerated with each other and exist as an independent phase in terms of morphology, and may be expressed as a single particle (one body particle, single grain), for example, as a single crystal.

The second positive electrode active material may further include a coating layer containing aluminium on the surface of the single particle. In this case, the initial discharge capacity and cycle-life characteristics at high voltage may be improved.

An aluminium content (e.g., amount) in the coating layer of the second positive electrode active material may be 0.1 mol% to 2 mol%, for example, about 0.2 mol% to about 1.9 mol%, about 0.3 mol% to about 1.8 mol%, about 0.5 mol% to about 1.5 mol%, or about 0.8 mol% to about 1.3 mol% based on 100 mol% of a total metal excluding lithium in the second positive electrode active material. This refers only to a content (e.g., amount) of aluminium included in the coating layer, excluding a content of the aluminium that may be included within the single particle. The aluminium content (e.g., amount) in the coating layer can be measured, for example, through SEM-EDS analysis of the surface or cross-section of the positive electrode active material. When the aluminium content (e.g., amount) in the coating layer satisfies the ranges, the coating layer may have a substantially uniform and thin thickness, which may not increase resistance of the positive electrode active material and effectively suppress or reduce a side reaction with the electrolyte and thereby, improve cycle-life characteristics of a rechargeable lithium battery under high-voltage and high-temperature conditions. For example, if the aluminium content (e.g., amount) of the coating layer is excessive, a substantially uniform coating layer may not be formed or resistance may increase, which may reduce charge/discharge efficiency and cycle-life characteristics, and if the aluminium content (e.g., amount) of the coating layer is too small, a coating layer of an appropriate or suitable thickness is not formed and an aspect of suppressing or reducing side reactions with the electrolyte may be reduced.

The coating layer of the second positive electrode active material may further include yttrium, and in this case, side reactions between the positive electrode active material and the electrolyte solution can be more effectively suppressed or reduced at high voltage, thereby improving cycle-life characteristics. An yttrium content (e.g., amount) in the coating layer may be 0.1 mol% to 1 mol%, for example, 0.1 mol% to about 0.9 mol%, 0.1 mol% to about 0.8 mol%, 0.1 mol% to about 0.6 mol%, 0.1 mol% to about 0.4 mol%, or 0.1 mol% to about 0.3 mol% based on 100 mol% of a total metal excluding lithium in the second positive electrode active material. If the yttrium content (e.g., amount) satisfies the above ranges, the positive electrode active material forms a good or suitable coating layer without reducing capacity or increasing resistance, effectively suppressing or reducing side reactions with the electrolyte and effectively reducing the amount of gas generated under high-voltage or high-temperature conditions.

The coating layer of the second positive electrode active material may include (e.g., be in a form of) a film that continuously surrounds the surface of a single particle, or, for example, may include (e.g., be in a form of) a shell that surrounds the entire surface of the single particle. This is distinct from a structure in which only a portion of the surface of the particle is partially coated. The coating layer according to some embodiments may be formed to have a very thin and substantially uniform thickness as well as entirely cover the surface of the single particle, which may neither increase resistance of the positive electrode active material nor deteriorate capacity and exhibits improved structural stability and may be effectively suppressed or reduced from a side reaction with the electrolyte, resultantly realizing long cycle-life characteristics at a high voltage.

A thickness of the coating layer of the second positive electrode active material may be 30 nm to 500 nm, for example, 30 nm to about 450 nm, 30 nm to about 400 nm, 30 nm to about 350 nm, 30 nm to about 300 nm, 30 nm to about 250 nm, 30 nm to about 200 nm, 30 nm to about 150 nm, about 50 nm to 500 nm, about 80 nm to 500 nm, or about 100 nm to 500 nm. If the coating layer satisfies the thickness ranges, the structural stability of the positive electrode active material may be improved without increasing resistance or reducing capacity due to the coating, and the side reaction with the electrolyte may be effectively suppressed or reduced. The thickness of the coating layer may be measured through, for example, TOF-SIMS, XPS, or EDS analysis, and the thickness range of the coating layer may be measured through TEM-EDS line profile.

The coating layer of the second positive electrode active material may be thin and substantially uniform in thickness, at the level of tens to hundreds of nanometers. For example, the deviation in coating layer thickness within one positive electrode active material particle may be less than or equal to about 20%, less than or equal to about 18%, or less than or equal to about 15%. Herein, the deviation in coating layer thickness refers to the coating layer thickness within one positive electrode active material particle. For example, the deviation of the coating layer thickness may be calculated by measuring the thickness of about 10 points in an electron microscopic image of the cross-section of a single positive electrode active material particle to calculate an arithmetic average, and then dividing the absolute value of the difference between one data and the arithmetic mean value by the arithmetic mean value and multiplying by 100. The fact that the deviation or standard deviation of the coating layer thickness may satisfy the above range suggests that a coating layer of substantially uniform thickness is well formed (or provided) in a form of a film on the surface of the positive electrode active material particle. Accordingly, the structural stability of the positive electrode active material is improved, side reactions with the electrolyte may be effectively suppressed or reduced, and the increase in resistance or decrease in capacity due to coating may be minimized or reduced.

In the coating layer of the second positive electrode active material, the aluminium may include (e.g., exist in the form of) a substantially continuous film, and the yttrium may include (e.g., exist in the form of) an island shape due to characteristics of each element.

In some embodiments, the aluminium and the yttrium may be mixed within one coating layer, wherein the aluminium may include (e.g., exist in the form of) a substantially continuous film, while the yttrium may include (e.g., exist in the form of) an island shape, but the present disclosure is not limited thereto.

In some embodiments, the aluminium and the yttrium may each form (or provide) a separate layer. For example, the second positive electrode active material may include a first coating layer containing the aluminium and arranged on the surface of single particles and a second coating layer containing the yttrium and arranged on the first coating layer. The aluminium is first attached or absorbed on the surface of the single particles to form (or provide) the first coating layer as a thin film, and the yttrium is coated thereon to form (or provide) the second coating layer. Herein, the aluminium and the yttrium are mixed in the first coating layer and the second coating layer, but the first coating layer may be an aluminium-rich coating layer containing the aluminium as a main component, and the second coating layer may be an yttrium-rich coating layer containing the yttrium as a main component. Herein, in the second coating layer, the yttrium may exist as an island shape but is not particularly limited thereto.

Thicknesses of the first coating layer and the second coating layer are not particularly limited. However, the thickness of the first coating layer may be about 10 nm to about 200 nm, for example, about 20 nm to about 200 nm, about 30 nm to about 200 nm, or about 30 nm to about 180 nm. The thickness of the second coating layer may be about 20 nm to about 300 nm, for example, about 20 nm to about 250 nm, about 20 nm to about 200 nm, about 30 nm to about 300 nm, or about 50 nm to about 300 nm. When each thickness satisfies the above ranges, the structural stability of the positive electrode active material may be improved without increasing resistance or decreasing capacity due to the coating, and cycle-life characteristics at high voltage may be improved by effectively suppressing or reducing side reactions with the electrolyte.

### Third Positive Electrode Active Material

The lithium transition metal phosphate of the third positive electrode active material may include, for example, lithium iron phosphate, lithium manganese iron phosphate, lithium manganese phosphate, lithium titanium phosphate, and/or a (e.g., any suitable) combination thereof.

The lithium transition metal phosphate of the third positive electrode active material may be represented by Chemical Formula 3, Chemical Formula 4, Chemical Formula 5, Chemical Formula 6, or Chemical Formula 7.

Chemical Formula 3 Liₐ₃Fe₍₁₋ₓ₃₎M³ₓ₃PO₄

In Chemical Formula 3, 0.90≤a3≤1.5, 0≤x3≤0.4, and M³ is Al, Ca, Ce, Cr, Cu, La, Mg, Mo, Nb, Ni, Sn, Sr, V, W, Y, Zn, Zr, and/or a (e.g., any suitable) combination thereof.

The compound represented by Chemical Formula 3 may be lithium iron phosphate. In Chemical Formula 3, for example, 0.90≤a3≤1.2, or 0.95≤a3≤1.1, and 0≤x3≤0.3, 0≤x3≤0.2, 0≤x3≤0.1, or 0<x3≤0.05. For example, if (e.g., when) a3=1 and x3=0, Chemical Formula 3 may be expressed as LiFePO₄.

Chemical Formula 4 Liₐ₄Mnₓ₄Fe_{(1-x4-y4)}M⁴_{y4}PO₄

In Chemical Formula 4, 0.90≤a4≤1.5, 0.1≤x4≤0.9, 0≤y4≤0.4, and M⁴ is Al, Ca, Ce, Cr, Cu, La, Mg, Mo, Nb, Ni, Sn, Sr, V, W, Y, Zn, Zr, and/or a (e.g., any suitable) combination thereof.

The compound represented by Chemical Formula 4 may be lithium manganese iron phosphate. In Chemical Formula 4, for example, 0.90≤a4≤1.2, or 0.95≤a4≤1.1 and 0.2≤x4≤0.8, 0.3≤x4≤0.7, or 0.4≤x4≤0.6. The compound represented by Chemical Formula 4 may be for example LiMn_{0.9}Fe_{0.1}PO₄, LiMn_{0.8}Fe_{0.2}PO₄, LiMn_{0.7}Fe_{0.3}PO₄, LiMn_{0.6}Fe_{0.4}PO₄, LiMn_{0.5}Fe_{0.5}PO₄, LiMn_{0.4}Fe_{0.6}PO₄, LiMn_{0.3}Fe_{0.7}PO₄, LiMn_{0.2}Fe_{0.8}PO₄, or LiMn_{0.1}Fe_{0.9}PO₄.

Chemical Formula 5 Liₐ₅Mn₍₁₋ₓ₅₎M⁵ₓ₅PO₄

In Chemical Formula 5, 0.90≤a5≤1.5, 0≤x5≤0.4, and M⁵ is Al, Ca, Ce, Cr, Cu, La, Mg, Mo, Nb, Ni, Sn, Sr, V, W, Y, Zn, Zr, and/or a (e.g., any suitable) combination thereof.

The compound represented by Chemical Formula 5 may be lithium manganese phosphate. In Chemical Formula 5, for example 0.90≤a5≤1.2, or 0.95≤a5≤1.1 and 0≤x5≤0.3, 0≤x5≤0.2, 0≤x5≤0.1, or 0<x5≤0.05. For example, if (e.g., when) a5=1 and x5=0, Chemical Formula 5 may be expressed as LiMnPO₄.

Chemical Formula 6 Liₐ₆Ti₍₂₋ₓ₆₎M⁶ₓ₆(PO₄)₃

In Chemical Formula 6, 0.90≤a6≤1.5, 0≤x6≤0.4, and M⁶ is Al, Ca, Ce, Cr, Cu, La, Mg, Mo, Nb, Ni, Sn, Sr, V, W, Y, Zn, Zr, and/or a (e.g., any suitable) combination thereof.

The compound represented by Chemical Formula 6 may be lithium titanium phosphate. In Chemical Formula 6, for example, 0.90≤a6≤1.2, or 0.95≤a6≤1.1, and 0≤x6≤0.3, 0≤x6≤0.2, 0≤x6≤0.1, or 0<x6≤0.05. For example, if (e.g., when) a6=1 and x6=0, Chemical Formula 6 may be expressed as LiTi₂(PO₄)₃.

Chemical Formula 7 Liₐ₇Ti₍₁₋ₓ₇₎M⁷ₓ₇PO₅

In Chemical Formula 7, 0.90≤a7≤1.5, 0≤x7≤0.4, and M⁷ is Al, Ca, Ce, Cr, Cu, La, Mg, Mo, Nb, Ni, Sn, Sr, V, W, Y, Zn, Zr, and/or a (e.g., any suitable) combination thereof.

The compound represented by Chemical Formula 7 may be lithium titanium phosphate. In Chemical Formula 7, for example, 0.90≤a7≤1.2, or 0.95≤a7≤1.1, and 0≤x7≤0.3, 0≤x7≤0.2, 0≤x7≤0.1, or 0<x7≤0.05. For example, if (e.g., when) a7=1 and x7=0, Chemical Formula 7 may be expressed as LiTiPO₅.

As a specific example, the lithium transition metal phosphate of the third positive electrode active material may be LiFePO₄, LiMn_{0.7}Fe_{0.3}PO₄, LiMn_{0.6}Fe_{0.4}PO₄, LiMn_{0.5}Fe_{0.5}PO₄, LiMn_{0.4}Fe_{0.6}PO₄, LiMn_{0.3}Fe_{0.7}PO₄, LiMnPO₄, LiTiPO₅, LiTi₂(PO₄)₃, and/or a (e.g., any suitable) combination thereof.

The cobalt content (e.g., amount) in the positive electrode active material according to some embodiments may be, for example, less than or equal to about 0.01 mol%, less than or equal to about 0.005 mol%, or less than or equal to about 0.001 mol%, for example, about 0 mol% to about 0.01 mol% based on about 100 mol% of a total metal excluding lithium. The positive electrode active material according to some embodiments may be, for example, a cobalt-free positive electrode active material.

Additionally, in some embodiments, another positive electrode active material may not include (e.g., may exclude) sodium. In general, sodium ions can be utilized in the preparing process of a positive electrode active material, but according to the preparing method described in more detail later, positive electrode active material particles with a stable structure and a coating layer of substantially uniform thickness can be formed without utilizing sodium ions.

### Method of Preparing Positive Electrode Active Material

In some embodiments, a method of preparing a positive electrode active material includes (i) mixing a nickel-manganese-based composite hydroxide having a nickel content (e.g., amount) of greater than or equal to about 60 mol% based on about 100 mol% of a total metal and a lithium raw material and performing heat treatment to prepare a first positive electrode active material in the form of secondary particles made by agglomerating a plurality of primary particles, (ii) mixing a nickel-manganese composite hydroxide with a nickel content (e.g., amount) of greater than or equal to 60 mol% based on 100 mol% of the total metal and a lithium raw material and heat treating the mixture to prepare a second positive electrode active material in the form of single particles, (iii) preparing a third positive electrode material including lithium transition metal phosphate, and (iv) mixing the first positive electrode active material, the second positive electrode active material, and the third positive electrode active material.

In the process of preparing the first and second positive electrode active materials, the nickel-manganese-based composite hydroxide may not include (e.g., may exclude) cobalt or may include a very small amount of cobalt, and may be, for example, a cobalt-free nickel-manganese-based composite hydroxide. For example, it may be a cobalt-free nickel-manganese-aluminium-based composite hydroxide. The nickel-manganese-based composite hydroxide may be prepared by a general coprecipitation method.

The nickel content in the nickel-manganese-based composite hydroxide may be greater than or equal to 60 mol%, for example, 60 mol% to about 80 mol%, about 65 mol% to about 80 mol%, about 70 mol% to about 80 mol%, 60 mol% to about 79 mol%, 60 mol% to about 78 mol%, or 60 mol% to about 75 mol%, based on 100 mol% of a total metal. When the nickel content (e.g. amount) satisfies the above ranges, high capacity can be achieved and structural stability can be increased even if the cobalt content (e.g., amount) is reduced.

The manganese content (e.g., amount) in the nickel-manganese-based composite hydroxide may be about 10 mol% to about 40 mol%, about 10 mol% to about 39 mol%, about 10 mol% to about 35 mol%, about 10 mol% to about 30 mol%, about 10 mol% to about 29 mol%, about 15 mol% to about 39 mol%, about 20 mol% to about 39 mol%, or about 20 mol% to about 30 mol%, based on about 100 mol% of a total metal.

In one or more embodiments, if (e.g., when) the nickel-manganese-based composite hydroxide further contains aluminium, the aluminium content (e.g., amount) may be greater than or equal to 0.1 mol%, greater than or equal to about 0.5 mol%, or greater than or equal to about 1 mol%, for example, about 1 mol% to 3 mol%, about 1 mol% to about 2.5 mol%, about 1 mol% to about 2 mol%, or about 1 mol% to about 1.9 mol% based on 100 mol% of a total metal. If the manganese and aluminium contents of the composite hydroxide satisfy the above ranges, high capacity may be realized while structural stability of the positive electrode active material may be increased, and production price may be lowered to increase economic efficiency.

In the nickel-manganese-based composite hydroxide, the cobalt content (e.g., amount) may be less than or equal to 0.01 mol%, less than or equal to about 0.005 mol%, or less than or equal to about 0.001 mol% based on about 100 mol% of a total metal. This nickel-manganese-based composite hydroxide may be economical as it avoids the increase in unit cost caused by cobalt, maximizes capacity, and improves structural stability.

As an example, the nickel-manganese-based composite hydroxide may be represented by Chemical Formula 2.

Chemical Formula 2 Niₓ₂Mn_{y2}Al_{z2}M²_{w2}(OH)₂

In Chemical Formula 2, 0.6≤x2≤0.8, 0.1≤y2≤0.4 0≤z2≤0.03, 0≤w2≤0.3, and 0.9≤x2+y2+z2+w2≤1.1, and M² is one or more elements of (e.g., selected from among) B, Ba, Ca, Ce, Cr, Fe, Mg, Mo, Nb, Si, Sn, Sr, Ti, V, W, Y, and/or Zr.

In Chemical Formula 2, for example, 0.6≤x2≤0.8, 0.1≤y2≤0.39, 0.01≤z2≤ 0.03, 0≤w2≤0.29.

In the preparation process of the first positive electrode active material, aluminium may be not additionally doped thereon, but an aluminium raw material may be utilized to prepare a precursor of nickel-manganese-aluminium-based composite hydroxide, in which the aluminium is evenly dispersed in a structure. Such a precursor may be utilized to prepare a positive electrode active material capable of stably maintaining the layered structure without cobalt despite repeated charges and discharges, in which aluminium byproducts or aluminium aggregates are not formed, resultantly, improving capacity and efficiency characteristics and cycle-life characteristics of the positive electrode active material.

In the preparation process of the first positive electrode active material, the nickel-manganese-based composite hydroxide and the lithium raw material may be mixed in a molar ratio of about 1:0.9 to about 1:1.8, for example, about 1:0.9 to about 1:1.5 or about 1:0.9 to about 1:1.2. The heat treatment after mixing may be performed under an oxygen atmosphere, for example, within a temperature range of about 750 °C to about 950 °C, about 780 °C to about 900 °C, or about 810 °C to about 890 °C for about 2 hours to about 20 hours or about 4 hours to about 12 hours. Through the heat treatment, lithium nickel-manganese-based composite oxide may be obtained. The obtained composite oxide includes about 60 mol% or more, for example, about 60 mol% to about 80 mol% of nickel based on about 100 mol% of a total metal, but cobalt may not be included or included in a very small amount of less than or equal to about 0.01 mol%.

The method of preparing the positive electrode active material according to some embodiments may further include obtaining lithium nickel-manganese-based composite oxide in the process of preparing the first positive electrode active material and then coating the lithium nickel-manganese-based composite oxide. The lithium nickel-manganese-based composite oxide has a significantly different residual lithium content (e.g., amount) and different surface characteristics from an oxide with other compositions, for example, a conventional nickel-based oxide such as a lithium nickel-cobalt-manganese-based composite oxide or a lithium nickel-cobalt-aluminium-based composite oxide, and/or the like, conventional coating methods may not succeed in forming (or providing) a good or suitable coating layer thereon in a form of a substantially uniform film. In some embodiments, a method is applied to improve high-voltage characteristics by uniformly (substantially uniformly) forming (or providing) a coating layer with a very thin thickness on the surface of a lithium nickel-manganese-based composite oxide with a very small amount of cobalt and a nickel content (e.g., amount) of greater than or equal to about 60 mol%. For example, the coating layer according to some embodiments may be formed by adding and mixing aluminium raw materials to an aqueous solvent, adding and mixing lithium nickel-manganese-based composite oxide, and then drying and reheating the mixture. This may be called a wet coating method.

The aqueous solvent may include distilled water, an alcohol-based solvent, and/or a (e.g., any suitable) combination thereof. The aluminium raw material may include, for example, aluminium nitrate, aluminium sulfate, aluminium carbonate, aluminium hydroxide, and/or a (e.g., any suitable) combination thereof. For example, the aluminium raw material may include aluminium sulfate, and in this case, it is advantageous to form (or provide) a coating layer with a substantially uniform thickness on the surface of the lithium nickel-manganese-based composite oxide particles. An aluminium content (e.g., amount) of the aluminium raw material may be designed to be about 0.1 mol% to about 2 mol%, for example, about 0.2 mol% to about 1.9 mol%, about 0.3 mol% to about 1.8 mol%, about 0.5 mol% to about 1.5 mol%, or about 0.8 mol% to about 1.3 mol% based on about 100 mol% of a total metal excluding lithium in the first positive electrode active material.

A solution obtained by mixing the aluminium raw materials in an aqueous solvent may have a pH of about 1.5 to about 3.5, for example, about 2.0 to about 3.4, about 2.5 to about 3.3, about 2.7 to about 3.3, or about 2.9 to about 3.2. Dropping and mixing the lithium nickel-manganese-based composite oxide into an aqueous solvent mixed with aluminium raw materials may proceed for about 5 minutes to about 80 minutes, about 5 minutes to about 60 minutes, or about 5 minutes to about 40 minutes. After the stirring, the mixed solution may have pH of about 4.5 to about 8.5, for example, about 5.0 to about 8.0, about 5.5 to about 7.5, or about 6.0 to about 7.0. If these conditions are satisfied, it is advantageous to form (or provide) a coating layer with a substantially uniform thickness.

The reheating may be understood as a process of forming (or providing) a coating layer and may be performed, for example, in an oxygen atmosphere at a temperature range of about 700 °C to about 850 °C, about 750 °C to about 840 °C, or about 800 °C to about 830 °C for about 2 hours to about 20 hours, or about 3 to about 10 hours.

In order to coat the zirconium in addition to the aluminium, the reheating may be performed by adding a zirconium raw material to a product obtained after the drying. The zirconium raw material may be, for example, zirconium oxide and may be added so that the zirconium content (e.g., amount) is about 0.05 mol% to about 1 mol% based on about 100 mol% of a total metal excluding lithium in the first positive electrode active material.

Likewise, in a process of preparing the second positive electrode active material, the nickel-manganese-based composite hydroxide and the lithium raw material may be mixed in a molar ratio of about 1:0.9 to about 1:1.8, for example, about 1:0.9 to about 1:1.5 or about 1:0.9 to about 1:1.2. After the mixing, the heat treatment may be performed under an oxygen atmosphere, for example, at about 750 °C to about 950 °C, about 780 °C to about 900 °C, or about 810 °C to about 890 °C for about 2 hours to about 20 hours or about 4 hours to about 12 hours. Through the heat treatment, the lithium nickel-manganese-based composite oxide may be obtained. The obtained composite oxide includes nickel in an amount of greater than or equal to about 60 mol%, for example, about 60 mol% to about 80 mol% based on about 100 mol% of a total metal but include no cobalt or include the cobalt in a very small amount of less than or equal to about 0.01 mol%. In order to obtain the lithium nickel-manganese-based composite oxide in the form of single particles, a pulverization process may be further included.

In the process of preparing the second positive electrode active material, after obtaining the single particles including the lithium nickel-manganese-based composite oxide by mixing and heat-treating the nickel-manganese-based composite hydroxide and the lithium raw material, a coating process of the single particles may be further included. The coating of the aluminium of the second positive electrode active material in the form of single particles also may adopt a wet coating method according to some embodiments to form a satisfactory coating layer in the form of a substantially uniform film. In other words, the lithium nickel-manganese-based composite oxide in the form of single particles is added to a solution of mixing the aluminium raw material in an aqueous solvent and then, dried and reheated to prepare the second positive electrode active material.

The aqueous solvent and the aluminium raw material may each independently be the same as described above. An aluminium content (e.g., amount) of the aluminium raw material may be designed to be about 0.1 mol% to about 2 mol%, for example, about 0.2 mol% to about 1.9 mol%, about 0.3 mol% to about 1.8 mol%, about 0.5 mol% to about 1.5 mol%, or about 0.8 mol% to about 1.3 mol% based on about 100 mol% of a total metal excluding lithium in the second positive electrode active material.

When the aluminium raw material is added to the aqueous solvent, the yttrium raw material may be added together to coat Al and Y. The yttrium raw material may be, for example, yttrium nitrate, yttrium sulfate, yttrium carbonate, yttrium hydroxide, and/or a (e.g., any suitable) combination thereof. An yttrium content (e.g., amount) of the yttrium raw material may be designed to be about 0.05 mol% to about 1 mol%, for example, about 0.1 mol% to about 0.9 mol%, about 0.1 mol% to about 0.8 mol%, about 0.1 mol% to about 0.6 mol%, about 0.1 mol% to about 0.4 mol%, or about 0.1 mol% to about 0.3 mol% based on about 100 mol% of a total metal excluding lithium in the second positive electrode active material. Each of the coating raw materials is designed within each range to form (or provide) a coating layer with a substantially uniform and thin thickness to tens to hundreds of nanometers, which may reduce gas generation of a rechargeable lithium battery under a high-voltage operating condition and improving high-capacity and long cycle-life characteristics.

The solution of mixing the aluminium raw material and optionally, the yttrium raw material in the aqueous solvent may have a pH of about 1.5 to about 3.5, for example, about 2.0 to about 3.4, about 2.5 to about 3.3, about 2.7 to about 3.3, or about 2.9 to about 3.2. The mixing of the lithium nickel-manganese-based composite oxide with the aqueous solvent, in which the aluminium raw material and the yttrium raw material are mixed, may be performed for about 5 minutes to about 80 minutes, about 5 minutes to about 60 minutes, or about 5 minutes to about 40 minutes. After the stirring, the mixed solution may have a pH of about 4.5 to about 8.5, for example, about 5.0 to about 8.0, about 5.5 to about 7.5, or about 6.0 to about 7.0. If these conditions are satisfied, it is advantageous to form (or provide) the coating layer with a substantially uniform thickness.

Drying after the mixing process can be understood as a process of removing the solvent and can be carried out, for example, at about 40 °C to about 240 °C, about 100 °C to about 220 °C, or about 150 °C to about 200 °C. The reheating may be understood as a process of forming (or providing) a coating layer and may be performed, for example, in an oxygen atmosphere at a temperature range of about 700 °C to about 850 °C, about 750 °C to about 840 °C, or about 800 °C to about 830 °C for about 2 hours to about 20 hours, or about 3 to about 10 hours. In one or more embodiments, the reheating temperature may be lower than the prior heating temperature, and the reheating time may be the same as or shorter than the prior heating times. Under these conditions, the reheating may be performed to obtain a desired or suitable coating layer.

The first positive electrode active material, the second positive electrode active material, and the third positive electrode active material may be mixed to include 60 wt% to 90 wt% of the first positive electrode active material, 5 wt% to 35 wt% of the second positive electrode active material, and 5 wt% to 35 wt% of the third positive electrode active material based on 100 wt% of a total thereof. For example, the first positive electrode active material may be included in an amount of 60 wt% to about 85 wt%, the second positive electrode active material may be included in an amount of about 10 wt% to about 25 wt%, and the third positive electrode active material may be included in an amount of 5 wt% to about 20 wt%. Each of the positive electrode active materials may be mixed within the ratios to maximize or increase energy density as well as increase capacity.

### Positive Electrode

In some embodiments, a positive electrode includes a positive electrode current collector and a positive electrode active material layer on the positive electrode current collector, wherein the positive electrode active material layer includes the aforementioned positive electrode active material. The positive electrode active material layer may further include other types (kinds) of positive electrode active materials in addition to the positive electrode active materials described above. Additionally, the positive electrode active material layer may optionally further include a binder, a conductive material, and/or a (e.g., any suitable) combination thereof.

According to some embodiments, a loading level of the positive electrode active material layer may be about 10 mg/cm² to about 40 mg/cm², for example, about 10 mg/cm² to about 30 mg/cm², or about 10 mg/cm² to about 20 mg/cm². Additionally, a density of the positive electrode active material layer in the final compressed positive electrode may be 3.4 g/cc to 3.7 g/cc, for example, about 3.5 g/cc to about 3.6 g/cc, or about 3.5 g/cc to about 3.58 g/cc. When applying the positive electrode active material according to some embodiments, it is advantageous to implement such a loading level and positive electrode density, and a positive electrode that satisfies the loading level and positive electrode density in the above range is suitable for implementing a high-capacity, high-energy-density rechargeable lithium battery. The density of the positive electrode active material layer refers to the ratio of the weight to the volume of the pressed positive active material layer. The density of the positive electrode active material layer can be measured by measuring a cross-sectional area, thickness and weight of the positive active material layer excluding the positive electrode current collector, calculating the volume by multiplying the cross-sectional area and the thickness, and dividing the weight by the volume.

### Binder

The binder improves binding properties of positive electrode active material particles with one another and with a current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, or nylon, but are not limited thereto.

### Conductive Material

The conductive material is included to provide electrode conductivity and any electrically conductive material may be utilized as a conductive material unless it causes a chemical change. Examples of the conductive material may include a carbon-based material such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; or a mixture thereof.

Each content (e.g., amount) of the binder and the conductive material may be about 0.5 wt% to about 5 wt%, or about 0.5 wt% to about 3 wt% based on about 100 wt% of the positive electrode active material layer.

The positive electrode current collector may include Al, but the present disclosure is not limited thereto.

### Rechargeable Lithium Battery

Some embodiments provide a rechargeable lithium battery including the aforementioned positive electrode, negative electrode, and electrolyte.

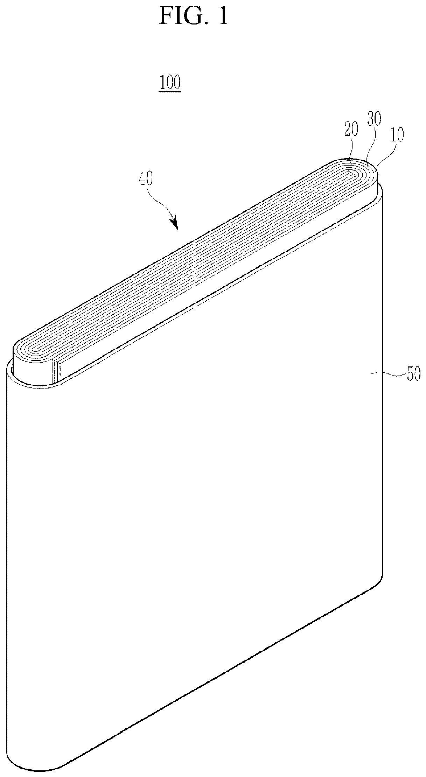

The rechargeable lithium battery may be classified into cylindrical, prismatic, pouch, coin, and/or the like depending on the shape. FIG. 1 is a schematic view showing a rechargeable lithium battery according to some embodiments. Referring to FIG. 1, a rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution.

The rechargeable lithium battery according to some embodiments may be rechargeable at a high voltage, or may be suitable for being driven at a high voltage. For example, the charging upper limit voltage of the rechargeable lithium battery may be about 4.3 V to about 4.6 V, or about 4.40 V to about 4.55 V. By applying the positive electrode active material according to some embodiments, the rechargeable lithium battery can significantly reduce an amount of gas generated even if (e.g., when) charged at high voltage and can achieve high-capacity and long cycle-life characteristics.

### Negative Electrode

The negative electrode may include a current collector and a negative electrode active material layer on the current collector, and may further include a negative electrode active material, a binder, a conductive material, and/or a (e.g., any suitable) combination thereof.

### Negative Electrode Active Material

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example, crystalline carbon, amorphous carbon, and/or a (e.g., any suitable) combination thereof as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and/or the like.

The lithium metal alloy includes an alloy of lithium and a metal of (e.g., selected from among) Na, K, Rb, Cs, Fr, Be, Mg, Ca, Sr, Si, Sb, Pb, In, Zn, Ba, Ra, Ge, Al, and/or Sn.

The material capable of doping/dedoping lithium may be a Si-based negative electrode active material or a Sn-based negative electrode active material. The Si-based negative electrode active material may include silicon, a silicon-carbon composite, SiOₓ (0 < x ≤ 2), a Si-Q alloy (wherein Q is an element of (e.g., selected from among) an alkali metal, an alkaline-earth metal, a Group 13 element, a Group 14 element (excluding Si), a Group 15 element, a Group 16 element, a transition metal, a rare earth element, and/or a (e.g., any suitable) combination thereof, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and/or a (e.g., any suitable) combination thereof), and/or a (e.g., any suitable) combination thereof. The Sn-based negative electrode active material may be Sn, SnOₓ (0 < x ≤ 2), (e.g., SnO₂), a Sn alloy, and/or a (e.g., any suitable) combination thereof.

The silicon-carbon composite may be a composite of silicon and amorphous carbon. An average particle diameter (D₅₀) of the silicon-carbon composite particles may be, for example, about 0.5 µm to about 20 µm. According to some embodiments, the silicon-carbon composite may include (e.g., may be in a form of) silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, and/or a (e.g., any suitable) combination thereof. The amorphous carbon may include soft carbon or hard carbon, a mesophase pitch carbonized product, and calcined coke.

When the silicon-carbon composite includes silicon and amorphous carbon, a content (e.g., amount) of silicon may be about 10 wt% to about 50 wt% and a content (e.g., amount) of amorphous carbon may be about 50 wt% to about 90 wt% based on about 100 wt% of the silicon-carbon composite. In one or more embodiments, if (e.g., when) the composite includes silicon, amorphous carbon, and crystalline carbon, a content (e.g., amount) of silicon may be about 10 wt% to about 50 wt%, a content (e.g., amount) of crystalline carbon may be about 10 wt% to about 70 wt%, and a content (e.g., amount) of amorphous carbon may be about 20 wt% to about 40 wt% based on about 100 wt% of the silicon-carbon composite.

Additionally, a thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in a form (or provide) of a silicon alloy, or in an oxidized form. The oxidized form of silicon may be represented by SiOₓ (0 < x ≤ 2). At this time, the atomic content (e.g., amount) ratio of Si:O, which indicates a degree of oxidation, may be about 99:1 to about 33:67. As utilized herein, if (e.g., when) a definition is not otherwise provided, an average particle diameter (D₅₀) indicates a particle where an accumulated volume is about 50 volume% in a particle distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and utilized, the mixing ratio may be a weight ratio of about 1:99 to about 90:10.

### Binder

The binder serves to well adhere the negative electrode active material particles to each other and also to adhere the negative electrode active material to the current collector. The binder may be a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may include a styrene-butadiene rubber, a (meth)acrylated styrene-butadiene rubber, a (meth)acrylonitrile-butadiene rubber, a (meth)acrylic rubber, butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

When an aqueous binder is utilized as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and utilized. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, and/or a (e.g., any suitable) combination thereof.

### Conductive Material

The conductive material is included to provide electrode conductivity (e.g., an electron conductor) and any electrically conductive material may be utilized as a conductive material unless it causes a chemical change. Examples of the conductive material include a carbon-based material such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; or a mixture thereof.

A content (e.g., amount) of the negative electrode active material may be about 95 wt% to about 99.5 wt% based on about 100 wt% of the negative electrode active material layer, and a content (e.g., amount) of the binder may be about 0.5 wt% to about 5 wt% based on about 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and may be in a form of a foil, sheet, or foam. A thickness of the negative electrode current collector may be, for example, about 1 µm to about 20 µm, about 5 µm to about 15 µm, or about 7 µm to about 10 µm.

### Electrolyte

For example, the electrolyte for a rechargeable lithium battery may be an electrolyte, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In one or more embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, or an ether bond, and/or the like; amides such as dimethylformamide; dioxolanes such as 1,3-dioxolane, 1,4-dioxolane, and/or the like; sulfolanes, and/or the like.

The non-aqueous organic solvent can be utilized alone or in a mixture of two or more types (kinds), and if (e.g., when) two or more types (kinds) are utilized in a mixture, a mixing ratio can be appropriately adjusted according to the desired or suitable battery performance, which is suitable to those working in the field.

When utilizing a carbonate-based solvent, a cyclic carbonate and a chain carbonate may be mixed and utilized, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and utilized in a volume ratio of about 1:1 to about 30:1.

The electrolyte may further include vinyl ethylene carbonate, vinylene carbonate, or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one of (e.g., at least one selected from among) LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFOB), and/or lithium bis(oxalato)borate (LiBOB).

A concentration of lithium salt may be within the range of about 0.1 M to about 2.0 M. If the concentration of lithium salt is within the above range, the electrolyte has appropriate or suitable ionic conductivity and viscosity, and thus excellent or suitable performance can be achieved and lithium ions can move effectively.

### Separator

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, and/or a (e.g., any suitable) combination thereof on a (e.g., one or both (e.g., opposite) surface (e.g., at least one surface or side or opposite surfaces or sides) of the porous substrate.

The porous substrate may be a polymer film formed of any one selected from among polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and/or polytetrafluoroethylene, or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acryl-based copolymer including a first structural unit derived from (meth)acrylamide, and a second structural unit including at least one of a structural unit derived from (meth)acrylic acid or (meth)acrylate, or a structural unit derived from (meth)acrylamidosulfonic acid or a salt thereof.

The inorganic material may include inorganic particles of (e.g., selected from among) Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and/or a (e.g., any suitable) combination thereof, but the present disclosure is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

Examples and comparative examples of the present disclosure are described herein. However, the following examples are only examples of the present disclosure, and the present disclosure is not limited to the following examples.

### Example 1

### 1. Preparation of Positive Electrode Active Material

### (1) Preparation of First Positive Electrode Active Material

Ni_{0.75}Mn_{0.23}Al_{0.02}(OH)₂ and LiOH were mixed in a molar ratio of about 1:1.05 and then, primarily heat-treated at about 850 °C under an oxygen atmosphere for about 8 hours to prepare a first composite oxide in a form of secondary particles having a composition of Li_{1.05}Ni_{0.75}Mn_{0.23}Al_{0.02}O₂ and an average particle diameter (D₅₀) of about 14 µm.

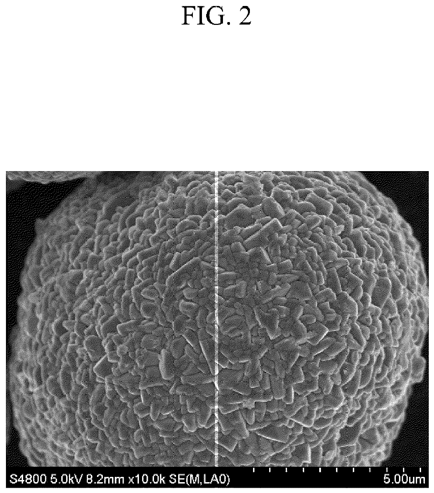

After adding aluminium sulfate to the distilled water solvent, the first composite oxide was added thereto and mixed for about 20 to about 60 minutes. Herein, an aluminium content (e.g., amount) of the aluminium sulfate was designed to be about 1.0 mol% based on about 100 mol% of a total metal excluding lithium in the first positive electrode active material. After removing the solvent from the mixed solution and then, drying the rest at about 190 °C, zirconium oxide was dry-mixed therewith and then, secondarily heat-treated at about 825 °C for about 8 hours under an oxygen atmosphere to obtain a first positive electrode active material. A zirconium content (e.g., amount) of zirconium oxide was designed to be about 0.2 mol% based on about 100 mol% of a total metal excluding lithium in the final first positive electrode active material. FIG. 2 is an SEM image of the prepared first positive electrode active material. The secondary particles of the first positive electrode active material had an average particle diameter (D₅₀) of about 14 µm.

### (2) Preparation of Second Positive Electrode Active Material

Ni_{0.75}Mn_{0.25}(OH)₂, LiOH, and Al₂O₃ were mixed in a molar ratio of about 1:1:0.02 and heat-treated at about 850 °C for about 8 hours under an oxygen atmosphere to prepare a second composite oxide having a composition of LiNi_{0.75}Mn_{0.23}Al_{0.02}O₂ in the form of single particles with an average particle diameter (D₅₀) of about 3 µm.

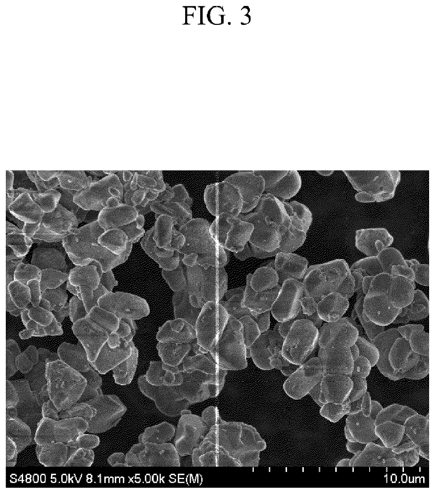

After mixing aluminium sulfate and yttrium nitrate in a distilled water solvent, the second composite oxide was added thereto and then, mixed for about 20 minutes to about 60 minutes. Herein, an aluminium content (e.g., amount) of the aluminium sulfate was designed to be about 0.4 mol%, and an yttrium content (e.g., amount) of the yttrium nitrate was designed to be about 0.1 mol% based on about 100 mol% of a total metal excluding lithium in a final second positive electrode active material. After removing the solvent from the mixed solution, the residue was dried at about 190 °C and heat-treated at about 825 °C for about 8 hours under an oxygen atmosphere to prepare the second positive electrode active material. FIG. 3 is an SEM image showing the second positive electrode active material. The single particles of the prepared second positive electrode active material had an average particle diameter (D₅₀) of about 3.5 µm.

### (3) Preparation of Third Positive Electrode Active Material

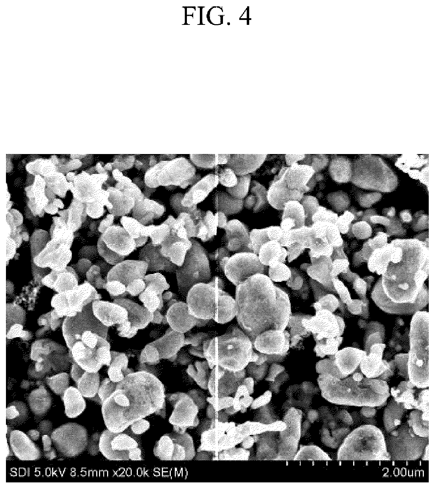

LiFePO₄ having primary particles having an average particle diameter (D₅₀) of about 200 nm was prepared. FIG. 4 is an SEM image of a third positive electrode active material.

### (4) Preparation of Final Positive Electrode Active Material

About 70 wt% of the first positive electrode active material, about 20 wt% of the second positive electrode active material, and about 10 wt% of the third positive electrode active material were mixed to prepare a final positive electrode active material.

### 2. Manufacture of Positive Electrode

About 98.5 wt% of the positive electrode active material, about 1.0 wt% of a polyvinylidene fluoride binder, and about 0.5 wt% of a carbon nanotube conductive material were mixed to prepare positive electrode active material layer slurry, and the slurry was coated on an aluminium foil current collector and then, dried and compressed to manufacture a positive electrode. A density of the final compressed positive electrode was about 3.46 g/cc.

### 3. Manufacture of Rechargeable Lithium Battery Cell

About 97.5 wt% of a graphite negative electrode active material, about 1.5 wt% of carboxymethyl cellulose, and about 1 wt% of a styrene butadiene rubber in a water solvent were mixed to prepare a negative electrode active material layer slurry. The negative electrode active material layer slurry was coated on a copper foil current collector and then, dried and compressed to manufacture a negative electrode.

A polytetrafluoroethylene separator was utilized, and an electrolyte prepared by dissolving about 1 M LiPF₆ in a mixed solvent of ethylene carbonate and dimethyl carbonate in a volume ratio of about 3:7 was utilized to manufacture a rechargeable lithium battery cell in a common method.

### Example 2

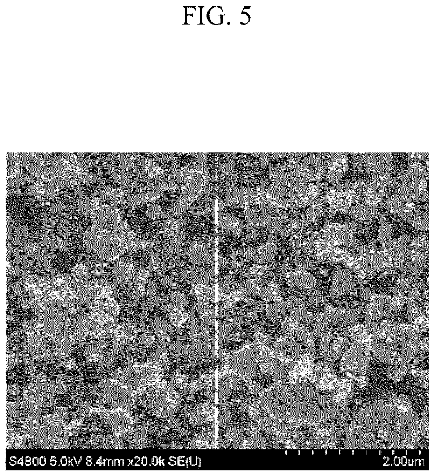

A positive electrode and a rechargeable lithium battery cell were manufactured in substantially the same manner as in Example 1 except that LiMn_{0.6}Fe_{0.4}PO₄ having primary particles with an average particle diameter (D₅₀) of about 180 nm was utilized as the third positive electrode active material. FIG. 5 is an SEM image showing the third positive electrode active material of Example 2.

### Comparative Example 1

A positive electrode and a rechargeable lithium battery cell were manufactured substantially in substantially the same manner as in Example 1 except that a mixture of about 80 wt% of the first positive electrode active material and about 20 wt% of the third positive electrode active material without utilizing the second positive electrode active material was utilized as the positive electrode active material.

### Comparative Example 2

A positive electrode and a rechargeable lithium battery cell were manufactured substantially in substantially the same manner as in Example 2 except that a mixture of about 80 wt% of the first positive electrode active material and about 20 wt% of the third positive electrode active material without utilizing the second positive electrode active material was utilized as the positive electrode active material.

### Comparative Example 3

A positive electrode and a rechargeable lithium battery cell were manufactured substantially in the same manner as in Example 1 except that a mixture of about 70 wt% of the first positive electrode active material and about 30 wt% of the second positive electrode active material without utilizing the third positive electrode active material was utilized as the positive electrode active material.

For better understanding, design details of the positive electrode active materials of the examples and the comparative examples are briefly shown in Table 1.

**Table 1**

| | First positive electrode active material | | | Second positive electrode active material | | | | Third positive electrode active material | | 4.45 V Capacity (mAh /g) | 4.45 V cycle-life (%, @50^{th} cycle) | Positive electrode density (g/cc) |
|---|---|---|---|---|---|---|---|---|---|---|---|---|
| | Al coating (mol%) | Zr coating (mol %) | wt % | Al doping (mol %) | Al coating (mol %) | Y coating (mol %) | wt % | composition | wt % | | | |
| Ex. 1 | 1.0 (wet) | 0.2 | 70 | 2.0 | 0.4 | 0.1 | 20 | LFP | 10 | 192.8 | 97.1 | 3.46 |
| Ex. 2 | 1.0 (wet) | 0.2 | 70 | 2.0 | 0.4 | 0.1 | 20 | LMFP | 10 | 191.5 | 96.5 | 3.45 |
| Comp. Ex. 1 | 1.0 (wet) | 0.2 | 80 | - | - | - | 0 | LFP | 20 | 189.4 | 96.9 | 3.32 |
| Comp. Ex. 2 | 1.0 (wet) | 0.2 | 80 | - | - | - | 0 | LMFP | 20 | 187.2 | 96.2 | 3.35 |
| Comp. Ex. 3 | 1.0 (wet) | 0.2 | 70 | 2.0 | 0.4 | 0.1 | 30 | - | 0 | 195.6 | 94.5 | 3.40 |

### Evaluation Example 1

The rechargeable lithium battery cells of the examples and the comparative examples were charged to an upper limit voltage of about 4.45 V at a constant current of about 0.2 C and to about 0.05 C at a constant voltage and then, discharged to a cutoff voltage of about 3.0 V at about 0.2 C at about 25 °C for initial charge and discharge, and the initial discharge capacity results are shown in Table 1. Subsequently, the cells were about 50 times or more charged at about 1.0 C and discharged at about 1.0 C within a voltage range of about 3.0 V to about 4.45 V at about 45 °C, and then, a ratio of the 50^{th} cycle discharge capacity to the initial discharge capacity was calculated and then, shown in Table 1.

In one or more embodiments, positive electrode mixture density in the rolled state of the examples and the comparative examples is shown in Table 1.

Referring to Table 1, the positive electrodes of the examples, compared with the comparative examples, each exhibited relatively high mixture density and excellent or suitable capacity characteristics and cycle-life characteristics if (e.g., when) driven at a high voltage of about 4.45 V. Comparative Examples 1 and 2, compared with the examples, each exhibited relatively low positive electrode mixture density and relatively low initial discharge capacity if (e.g., when) driven at the high voltage driving.

A battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

In present disclosure, "not include a or any 'component'" "exclude a or any 'component"', "'component'-free", and/or the like refers to that the "component" not being added, selected or utilized as a component in the composition/structure, but the "component" of less than a suitable amount may still be included due to other impurities and/or external factors.

While this present disclosure has been described in connection with what is presently considered to be practical example embodiments, it is to be understood that the present disclosure is not limited to the disclosed embodiments.

### Reference Numerals

| | | | |
|---|---|---|---|
| 100: | rechargeable lithium battery | 10: | positive electrode |
| 20: | negative electrode | 30: | separator |
| 40: | electrode assembly | 50: | case |

## Claims

1. A positive electrode active material comprising:
a first positive electrode active material comprising a lithium nickel-manganese-based composite oxide having a nickel content of greater than or equal to 60 mol%, and a cobalt content of 0 mol% to 0.01 mol%, based on 100 mol% of a total metal excluding lithium and including secondary particles made by agglomerating a plurality of primary particles, wherein an average particle diameter (D₅₀) of the secondary particles is 10 µm to 20 µm;
a second positive electrode active material comprising a lithium nickel-manganese-based composite oxide having a nickel content of greater than or equal to 60 mol%, and a cobalt content of 0 mol% to 0.01 mol%, based on 100 mol% of a total metal excluding lithium and including single particles, wherein an average particle diameter (D₅₀) of the single particles is 2 µm to 8 µm; and
a third positive electrode active material comprising particles including lithium transition metal phosphate.

2. The positive electrode active material as claimed in claim 1, wherein
the particles of the third positive electrode active material have an average particle diameter (D₅₀) of 10 nm to 2 µm.

3. The positive electrode active material as claimed in claim 1 or claim 2, wherein
based on a total of 100 wt% of the first positive electrode active material, the second positive electrode active material, and the third positive electrode active material, the first positive electrode active material is in an amount of 60 wt% to 90 wt%, the second positive electrode active material is included in an amount of 5 wt% to 35 wt%, and the third positive electrode active material is included in an amount of 5 wt% to 35 wt%.

4. The positive electrode active material as claimed in any one of claims 1 to 3, wherein
the lithium nickel-manganese-based composite oxide of the first positive electrode active material and the lithium nickel-manganese-based composite oxide of the second positive electrode active material are the same or different from each other and a nickel content is each independently 60 mol% to 80 mol% based on 100 mol% of a total metal excluding lithium.

5. The positive electrode active material as claimed in any one of claims 1 to 4, wherein:
(i) the lithium nickel-manganese-based composite oxide of the first positive electrode active material and the lithium nickel-manganese-based composite oxide of the second positive electrode active material each independently comprises a lithium nickel-manganese-aluminium-based composite oxide that further comprises aluminium in addition to nickel and manganese, and
an aluminium content in the lithium nickel-manganese-aluminum-based composite oxide is 0.1 mol% to 3 mol% based on 100 mol% of a total metal excluding lithium; and/or
(ii) the lithium transition metal phosphate of the third positive electrode active material has a cobalt content of at most 0.01 mol% based on 100 mol% of a total metal excluding lithium.

6. The positive electrode active material as claimed in any one of claims 1 to 5, wherein
the lithium nickel-manganese-based composite oxide of the first positive electrode active material and the lithium nickel-manganese-based composite oxide of the second positive electrode active material are each independently represented by Chemical Formula 1:
Chemical Formula 1 Liₐ₁Niₓ₁Mn_{y1}Al_{z1}M¹_{w1}O_{2-b1}X_{b1}
wherein, in Chemical Formula 1, 0.9≤a1 ≤ 1.8, 0.6≤x1 ≤ 0.8, 0.1 ≤ y1 ≤ 0.4, 0 ≤ z1 ≤ 0.03, 0 ≤ w1 ≤ 0.3, 0.9 ≤ x1+y1+z1+w1 ≤ 1.1, and 0 ≤ b1 ≤ 0.1, M¹ is one or more elements selected from among B, Ba, Ca, Ce, Cr, Fe, Mg, Mo, Nb, Si, Sn, Sr, Ti, V, W, Y, and Zr, and X is one or more elements selected from among F, P, and S, optionally wherein
in Chemical Formula 1, 0.6≤x1 ≤ 0.8, 0.1 ≤ y1 ≤ 0.39, 0.01 ≤ z1 ≤ 0.03, and 0 ≤ w1 ≤ 0.29 are satisfied.

7. The positive electrode active material as claimed in any one of claims 1 to 6, wherein
the first positive electrode active material further comprises a coating layer containing aluminium on the surface of the secondary particles, and
an aluminium content of the coating layer is 0.1 mol% to 2 mol% based on 100 mol% of a total metal excluding lithium in the first positive electrode active material.

8. The positive electrode active material as claimed in claim 7, wherein
the coating layer further comprises zirconium, yttrium, or a combination thereof, optionally wherein
the coating layer further comprises 0.05 mol% to 1 mol% of zirconium and/or 0.05 mol% to 1 mol% of yttrium based on 100 mol% of a metal excluding lithium in the first positive electrode active material.

9. The positive electrode active material as claimed in claim 7 or claim 8, wherein:
(i) the coating layer of the first positive electrode active material comprises a shell that continuously surrounds the surface of each of the secondary particles; and/or
(ii) the coating layer of the first positive electrode active material has a thickness of 30 nm to 500 nm; and/or
(iii) the first positive electrode active material further comprises a grain boundary coating portion containing aluminium on the surface of the primary particles inside each of the secondary particles.

10. The positive electrode active material as claimed in any one of claims 1 to 9, wherein
the second positive electrode active material further comprises a coating layer containing aluminium on the surface of the single particle, and
an aluminium content of the coating layer is 0.1 mol% to 2 mol% based on 100 mol% of a total metal excluding lithium in the second positive electrode active material.

11. The positive electrode active material as claimed in claim 10, wherein:
(i) the coating layer of the second positive electrode active material comprises a shell that continuously surrounds the surface of each of the single particles; and/or
(ii) a thickness of the coating layer of the second positive electrode active material is 30 nm to 500 nm; and/or
(iii) the coating layer of the second positive electrode active material further comprises yttrium, and
an yttrium content of the coating layer is 0.1 mol% to 1 mol% based on 100 mol% of a total metal excluding lithium in the second positive electrode active material, optionally wherein:
in the coating layer of the second positive electrode active material,
the aluminium comprises a continuous film and yttrium comprises islands; or
the second positive electrode active material comprises a first coating layer on the surface of the single particle and containing aluminium, and a second coating layer on the first coating layer and containing yttrium.

12. The positive electrode active material as claimed in any one of claims 1 to 11, wherein
the lithium transition metal phosphate of the third positive electrode active material comprises lithium iron phosphate, lithium manganese iron phosphate, lithium manganese phosphate, lithium titanium phosphate, or a combination thereof.

13. The positive electrode active material as claimed in any one of claims 1 to 11, wherein:
(i) the lithium transition metal phosphate of the third positive electrode active material is represented by Chemical Formula 3, Chemical Formula 4, Chemical Formula 5, Chemical Formula 6, or Chemical Formula 7:
Chemical Formula 3 Liₐ₃Fe₍₁₋x₃₎M³ₓ₃PO₄,
in Chemical Formula 3, 0.90≤a3≤1.5, 0≤x3≤0.4, and M³ is Al, Ca, Ce, Cr, Cu, La, Mg, Mo, Nb, Ni, Sn, Sr, V, W, Y, Zn, Zr, or a combination thereof,
Chemical Formula 4 Liₐ₄Mnₓ₄Fe_{(1-x4-y4)}M⁴_{y4}PO₄,
in Chemical Formula 4, 0.90≤a4≤1.5, 0.1≤x4≤0.9, 0≤y4≤0.4, and M⁴ is Al, Ca, Ce, Cr, Cu, La, Mg, Mo, Nb, Ni, Sn, Sr, V, W, Y, Zn, Zr, or a combination thereof,
Chemical Formula 5 Liₐ₅Mn₍₁-ₓ₅₎M⁵ₓ₅PO₄,
in Chemical Formula 5, 0.90 ≤ a5 ≤ 1.5, 0 ≤ x5 ≤ 0.4, and M⁵ is Al, Ca, Ce, Cr, Cu, La, Mg, Mo, Nb, Ni, Sn, Sr, V, W, Y, Zn, Zr, or a combination thereof,
Chemical Formula 6 Liₐ₆Ti₍₂₋ₓ₆₎M⁶ₓ₆(PO₄)₃,
in Chemical Formula 6, 0.90 ≤ a6 ≤ 1.5, 0 ≤ x6 ≤ 0.4, and M⁶ is Al, Ca, Ce, Cr, Cu, La, Mg, Mo, Nb, Ni, Sn, Sr, V, W, Y, Zn, Zr, or a combination thereof,
Chemical Formula 7 Liₐ₇Ti₍₁₋ₓ₇₎M⁷ₓ₇PO₅,
in Chemical Formula 7, 0.90 ≤ a7 ≤ 1.5, 0 ≤ x7 ≤ 0.4, and M⁷ is Al, Ca, Ce, Cr, Cu, La, Mg, Mo, Nb, Ni, Sn, Sr, V, W, Y, Zn, Zr, or a combination thereof; or
(ii) the lithium transition metal phosphate of the third positive electrode active material comprises LiFePO₄, LiMn_{0.7}Fe_{0.3}PO₄, LiMn_{0.6}Fe_{0.4}PO₄, LiMn_{0.5}Fe_{0.5}PO₄, LiMn_{0.4}Fe_{0.6}PO₄, LiMn_{0.3}Fe_{0.7}PO₄, LiMnPO₄, LiTiPO₅, LiTi₂(PO₄)₃, or combination thereof.

14. A positive electrode comprising
a positive electrode current collector, and
a positive electrode active material layer on the positive electrode current collector,
wherein the positive electrode active material layer comprises the positive electrode active material as claimed in any one of claims 1 to 13, optionally wherein
the positive electrode active material layer has a density of 3.4 g/cc to 3.7 g/cc.

15. A rechargeable lithium battery, comprising
the positive electrode as claimed in claim 14,
a negative electrode, and
an electrolyte.

## Patentansprüche

1. Positivelektroden-Aktivmaterial, umfassend:
ein erstes Positivelektroden-Aktivmaterial, umfassend ein Lithium-Nickel-Manganbasiertes Verbundoxid, das einen Nickelgehalt von mehr als oder gleich 60 Mol-%, und einem Cobaltgehalt von 0 Mol-% bis 0,01 Mol-%, basierend auf 100 Mol-% eines Gesamtmetalls ohne Lithium und das Sekundärpartikel beinhaltet, die durch Agglomeration einer Vielzahl von Primärpartikeln gefertigt werden, aufweist, wobei ein mittlerer Partikeldurchmesser (D₅₀) der Sekundärpartikel 10 µm bis 20 µm beträgt;
ein zweites Positivelektroden-Aktivmaterial, umfassend ein Lithium-Nickel-Mangan-basiertes Verbundoxid, das einen Nickelgehalt von mehr als oder gleich 60 Mol-%, und einem Cobaltgehalt von 0 Mol-% bis 0,01 Mol-%, basierend auf 100 Mol-% eines Gesamtmetalls ohne Lithium und das Einzelpartikel beinhaltet, aufweist, wobei ein mittlerer Partikeldurchmesser (D₅₀) der Einzelpartikel 2 µm bis 8 µm beträgt; und
ein drittes Positivelektroden-Aktivmaterial, das Partikel umfasst, die Lithium-Übergangsmetallphosphat beinhalten.

2. Positivelektroden-Aktivmaterial nach Anspruch 1, wobei die Partikel des dritten Positivelektroden-Aktivmaterials einen mittleren Partikeldurchmesser (D₅₀) von 10 nm bis 2 µm aufweisen.

3. Positivelektroden-Aktivmaterial nach Anspruch 1 oder Anspruch 2, wobei basierend auf einem Gesamtwert von 100 Gew.-% des ersten Positivelektroden-Aktivmaterials, des zweiten Positivelektroden-Aktivmaterials und des dritten Positivelektroden-Aktivmaterials das erste Positivelektroden-Aktivmaterial in einer Menge von 60 Gew.-% bis 90 Gew.-%, das zweite Positivelektroden-Aktivmaterial in einer Menge von 5 Gew.-% bis 35 Gew.-% beinhaltet ist, und das dritte Positivelektroden-Aktivmaterial in einer Menge von 5 Gew.-% bis 35 Gew.-% beinhaltet ist.

4. Positivelektroden-Aktivmaterial nach einem der Ansprüche 1 bis 3, wobei
das Lithium-Nickel-Mangan-basierte Verbundoxid des ersten Positivelektroden-Aktivmaterials und das Lithium-Nickel-Mangan-basierte Verbundoxid des zweiten Positivelektroden-Aktivmaterials gleich sind oder sich voneinander unterscheiden, und ein Nickelgehalt jeweils unabhängig 60 Mol-% bis 80 Mol-% basierend auf 100 Mol-% eines Gesamtmetalls ohne Lithium beträgt.

5. Positivelektroden-Aktivmaterial nach einem der Ansprüche 1 bis 4, wobei:
(i) das Lithium-Nickel-Mangan-basierte Verbundoxid des ersten Positivelektroden-Aktivmaterials und das Lithium-Nickel-Mangan-basierte Verbundoxid des zweiten Positivelektroden-Aktivmaterial jeweils unabhängig voneinander ein Lithium-Nickel-Mangan-Aluminium-basiertes Verbundoxid umfassen, das weiter Aluminium zusätzlich zu Nickel und Mangan umfasst, und
ein Aluminiumgehalt im Lithium-Nickel-Mangan-Aluminium-basierten Verbundoxid 0,1 Mol-% bis 3 Mol-%, basierend auf 100 Mol-% des Gesamtmetalls ohne Lithium beträgt; und/oder
(ii) das Lithium-Übergangsmetallphosphat des dritten Positivelektroden-Aktivmaterials einen Cobaltgehalt von höchstens 0,01 Mol-% basierend auf 100 Mol-% des Gesamtmetalls ohne Lithium aufweist.

6. Positivelektroden-Aktivmaterial nach einem der Ansprüche 1 bis 5, wobei
das Lithium-Nickel-Mangan-basierte Verbundoxid des ersten Positivelektroden-Aktivmaterials und das Lithium-Nickel-Mangan-basierte Verbundoxid des zweiten Positivelektroden-Aktivmaterials jeweils unabhängig durch die chemische Formel 1 dargestellt sind:
Chemische Formel 1 Liₐ₁Niₓ₁Mn_{y1}Al_{z1}M¹_{w1}O_{2-b1}X_{b1}
wobei in der chemischen Formel 1 0,9≤a1≤1,8, 0,6≤x1≤0,8, 0,1≤y1≤0,4, 0≤z1≤0,03, 0≤w1≤0,3, 0,9≤x1+y1+z1+w1≤1,1 und 0≤b1≤0,1 gilt, wobei M¹ ein oder mehrere Elemente ausgewählt aus B, Ba, Ca, Ce, Cr, Fe, Mg, Mo, Nb, Si, Sn, Sr, Ti, V, W, Y und Zr ist und X ein oder mehrere Elemente ausgewählt aus F, P und S ist, wobei optional
in der chemischen Formel 1 0,6≤x1≤0,8, 0,1≤y1≤0,39, 0,01≤z1≤0,03 und 0≤w1≤0,29 erfüllt sind.

7. Positivelektroden-Aktivmaterial nach einem der Ansprüche 1 bis 6, wobei
das erste Positivelektroden-Aktivmaterial weiter eine Beschichtungsschicht, die Aluminium auf der Oberfläche der Sekundärpartikel enthält, umfasst, und
der Aluminiumgehalt der Beschichtungsschicht 0,1 Mol-% bis 2 Mol-%, basierend auf 100 Mol-% des Gesamtmetalls ohne Lithium im ersten Positivelektroden-Aktivmaterial beträgt.

8. Positivelektroden-Aktivmaterial nach Anspruch 7, wobei
die Beschichtungsschicht weiter Zirkonium, Yttrium oder eine Kombination davon umfasst, wobei optional
die Beschichtungsschicht weiter 0,05 Mol-% bis 1 Mol-% an Zirkonium und/oder 0,05 Mol-% bis 1 Mol-% an Yttrium, basierend auf 100 Mol-% eines Metalls ohne Lithium im ersten Positivelektroden-Aktivmaterial umfasst.

9. Positivelektroden-Aktivmaterial nach Anspruch 7 oder Anspruch 8, wobei:
(i) die Beschichtungsschicht des ersten Positivelektroden-Aktivmaterials eine Schale umfasst, welche die Oberfläche jedes der Sekundärpartikel kontinuierlich umgibt; und/oder
(ii) die Beschichtungsschicht des ersten Positivelektroden-Aktivmaterials eine Dicke von 30 nm bis 500 nm aufweist; und/oder
(iii) das erste Positivelektroden-Aktivmaterial weiter einen Korngrenzenbeschichtungsabschnitt umfasst, der Aluminium auf der Oberfläche der Primärpartikel innerhalb jedes der Sekundärpartikel enthält.

10. Positivelektroden-Aktivmaterial nach einem der Ansprüche 1 bis 9, wobei
das zweite Positivelektroden-Aktivmaterial weiter eine Beschichtungsschicht, die Aluminium auf der Oberfläche des Einzelpartikels enthält, umfasst, und
ein Aluminiumgehalt der Beschichtungsschicht beträgt 0,1 Mol-% bis 2 Mol-%, basierend auf 100 Mol-% des Gesamtmetalls ohne Lithium im zweiten Positivelektroden-Aktivmaterial beträgt.

11. Positivelektroden-Aktivmaterial nach Anspruch 10, wobei:
(i) die Beschichtungsschicht des zweiten Positivelektroden-Aktivmaterials eine Schale umfasst, welche die Oberfläche jedes der Einzelpartikel kontinuierlich umgibt; und/oder
(ii) eine Dicke der Beschichtungsschicht des zweiten Positivelektroden-Aktivmaterials 30 nm bis 500 nm beträgt; und/oder
(iii) die Beschichtungsschicht des zweiten Positivelektroden-Aktivmaterials weiter Yttrium umfasst, und
ein Yttriumgehalt der Beschichtungsschicht beträgt 0,1 Mol-% bis 1 Mol-%, basierend auf 100 Mol-% des Gesamtmetalls ohne Lithium im zweiten Positivelektroden-Aktivmaterial beträgt, wobei optional:
in der Beschichtungsschicht des zweiten Positivelektroden-Aktivmaterials,
das Aluminium einen durchgehenden Film umfasst und Yttrium Inseln umfasst; oder
das zweite Positivelektroden-Aktivmaterial eine erste Beschichtungsschicht auf der Oberfläche des Einzelpartikels umfasst, die Aluminium enthält, und eine zweite Beschichtungsschicht auf der ersten Beschichtungsschicht, die Yttrium enthält.

12. Positivelektroden-Aktivmaterial nach einem der Ansprüche 1 bis 11, wobei
das Lithium-Übergangsmetallphosphat des dritten Positivelektroden-Aktivmaterials Lithiumeisenphosphat, Lithiummanganeisenphosphat, Lithiummanganphosphat, Lithiumtitanphosphat oder eine Kombination davon umfasst.

13. Positivelektroden-Aktivmaterial nach einem der Ansprüche 1 bis 11, wobei:
(i) das Lithium-Übergangsmetallphosphat des dritten Positivelektroden-Aktivmaterials durch die chemische Formel 3, die chemische Formel 4, die chemische Formel 5, die chemische Formel 6 oder die chemische Formel 7 dargestellt ist:
Chemische Formel 3 Liₐ₃Fe₍₁₋ₓ₃₎M³ₓ₃PO₄,
in der chemischen Formel 3, 0,90≤a3≤1,5, 0≤x3≤0,4, und M³ Al, Ca, Ce, Cr, Cu, La, Mg, Mo, Nb, Ni, Sn, Sr, V, W, Y, Zn, Zr oder eine Kombination davon ist,
Chemische Formel 4 Liₐ₄Mn_{X4}Fe_{(1-x4-y4)}M⁴_{y4}PO₄,
in der chemischen Formel 4, 0,90≤a4≤1,5, 0,1≤x4≤0,9, 0≤y4≤0,4 und M⁴ Al, Ca, Ce, Cr, Cu, La, Mg, Mo, Nb, Ni, Sn, Sr, V, W, Y, Zn, Zr oder eine Kombination davon ist,
Chemische Formel 5 Liₐ₅Mn₍₁₋ₓ₅₎M⁵ₓ₅PO₄,
in der chemischen Formel 5, 0,90≤a5≤1,5, 0≤x5≤0,4, und M⁵ Al, Ca, Ce, Cr, Cu, La, Mg, Mo, Nb, Ni, Sn, Sr, V, W, Y, Zn, Zr oder eine Kombination davon ist,
Chemische Formel 6 Lia₆Ti₍₂₋ₓ₆₎M⁶ₓ₆(PO₄)₃,
in der chemischen Formel 6, 0,90≤a6≤1,5, 0≤x6≤0,4, und M⁶ Al, Ca, Ce, Cr, Cu, La, Mg, Mo, Nb, Ni, Sn, Sr, V, W, Y, Zn, Zr oder eine Kombination davon ist,
Chemische Formel 7 Liₐ₇Ti₍₁₋ₓ₇₎M⁷ₓ₇PO₅,
in der chemischen Formel 7, 0,90≤a7≤1,5, 0≤x7≤0,4, und M⁷ Al, Ca, Ce, Cr, Cu, La, Mg, Mo, Nb, Ni, Sn, Sr, V, W, Y, Zn, Zr oder eine Kombination davon ist; oder
(ii) das Lithium-Übergangsmetallphosphat des dritten Positivelektroden-Aktivmaterials LiFePO₄, LiMn_{0,7}Fe_{0,3}PO₄, LiMn_{0,6}Fe_{0,4}PO₄, LiMn_{0,5}Fe_{0,5}PO₄, LiMn_{0,4}Fe_{0,6}PO₄, LiMn_{0,3}Fe_{0,7}PO₄, LiMnPO₄, LiTiPO₅, LiTi₂(PO₄)₃ oder eine Kombination davon umfasst.

14. Positivelektrode, umfassend
einen Positivelektroden-Stromabnehmer, und
eine Positivelektroden-Aktivmaterial-Schicht auf dem Positivelektroden-Stromabnehmer,
wobei die Positivelektroden-Aktivmaterial-Schicht das Positivelektroden-Aktivmaterial nach einem der Ansprüche 1 bis 13 umfasst, wobei optional
die Positivelektroden-Aktivmaterial-Schicht eine Dichte von 3,4 g/cc bis 3,7 g/cc aufweist.

15. Aufladbare Lithiumbatterie, umfassend
die Positivelektrode nach Anspruch 14,
eine Negativelektrode, und
einen Elektrolyten.

## Revendications

1. Matériau actif d'électrode positive comprenant :
un premier matériau actif d'électrode positive comprenant un oxyde composite à base de lithium nickel-manganèse présentant une teneur en nickel supérieure ou égale à 60 % en moles, et une teneur en cobalt de 0 % en moles à 0,01 % en moles %, sur la base de 100 % en moles d'un métal total à l'exclusion de lithium et incluant des particules secondaires fabriquées par agglomération d'une pluralité de particules primaires, dans lequel un diamètre de particule moyen (D₅₀) des particules secondaires est de 10 µm à 20 µm ;
un deuxième matériau actif d'électrode positive comprenant un oxyde composite à base de lithium nickel-manganèse présentant une teneur en nickel supérieure ou égale à 60 % en moles, et une teneur en cobalt de 0 % en moles à 0,01 % en moles %, sur la base de 100 % en moles d'un métal total à l'exclusion de lithium et incluant des particules individuelles, dans lequel un diamètre de particule moyen (D₅₀) des particules individuelles est de 2 µm à 8 µm ; et
un troisième matériau actif d'électrode positive comprenant des particules incluant du phosphate de métal de transition au lithium.

2. Matériau actif d'électrode positive selon la revendication 1, dans lequel les particules du troisième matériau actif d'électrode positive présentent un diamètre de particule moyen (D₅₀) de 10 nm à 2 µm.

3. Matériau actif d'électrode positive selon la revendication 1 ou 2, dans lequel sur la base d'un total de 100 % en poids du premier matériau actif d'électrode positive, du deuxième matériau actif d'électrode positive et du troisième matériau actif d'électrode positive, le premier matériau actif d'électrode positive est en une quantité de 60 % en poids à 90 % en poids, le deuxième matériau actif d'électrode positive est inclus en une quantité de 5 % en poids à 35 % en poids, et le troisième matériau actif d'électrode positive est inclus en une quantité de 5 % en poids à 35 % en poids.

4. Matériau actif d'électrode positive selon l'une quelconque des revendications 1 à 3, dans lequel
l'oxyde composite à base de lithium nickel-manganèse du premier matériau actif d'électrode positive et l'oxyde composite à base de lithium nickel-manganèse du deuxième matériau actif d'électrode positive sont identiques ou différents l'un de l'autre et une teneur en nickel est chacune indépendamment de 60 % en moles à 80 % en moles sur la base de 100 % en moles du métal total à l'exclusion de lithium.

5. Matériau actif d'électrode positive selon l'une quelconque des revendications 1 à 4, dans lequel :
(i) l'oxyde composite à base de lithium nickel-manganèse du premier matériau actif d'électrode positive et l'oxyde composite à base de lithium nickel-manganèse du deuxième matériau actif d'électrode positive comprennent chacun indépendamment un oxyde composite à base de lithium nickel-manganèse-aluminium qui comprend en outre de l'aluminium en plus de nickel et de manganèse, et
une teneur en aluminium dans l'oxyde composite à base de lithium nickel-manganèse-aluminium est de 0,1 % en moles à 3 % en moles sur la base de 100 % en moles d'un métal total à l'exclusion de lithium ; et/ou
(ii) le phosphate de métal de transition de lithium du troisième matériau actif d'électrode positive présente une teneur en cobalt d'au plus 0,01 % en moles sur la base de 100 % en moles d'un métal total, à l'exclusion de lithium.

6. Matériau actif d'électrode positive selon l'une quelconque des revendications 1 à 5, dans lequel
l'oxyde composite à base de lithium nickel-manganèse du premier matériau actif d'électrode positive et l'oxyde composite à base de lithium nickel-manganèse du deuxième matériau actif d'électrode positive sont chacun indépendamment représentés par la formule chimique 1 :
Formule chimique 1 Liₐ₁ Niₓ₁ Mn_{y1} Al_{z1} M¹_{w1} O_{2-b1}X_{b1}
dans lequel, dans la formule chimique 1, 0,9≤a1≤1,8, 0,6≤x1≤0,8, 0,1≤y1≤0,4, 0≤z1≤0,03, 0≤w1≤0,3, 0,9≤x1+y1+z1+w1≤1,1, et 0≤b1≤0,1, M¹ est un ou plusieurs éléments sélectionnés parmi B, Ba, Ca, Ce, Cr, Fe, Mg, Mo, Nb, Si, Sn, Sr, Ti, V, W, Y et Zr, et X est un ou plusieurs éléments sélectionnés parmi F, P et S, facultativement dans lequel
dans la formule chimique 1, 0,6≤x1≤0,8, 0,1≤y1≤0,39, 0,01≤z1≤0,03, et 0≤w1≤ 0,29 sont satisfaits.

7. Matériau actif d'électrode positive selon l'une quelconque des revendications 1 à 6, dans lequel
le premier matériau actif d'électrode positive comprend en outre une couche de revêtement contenant de l'aluminium sur la surface des particules secondaires, et
une teneur en aluminium de la couche de revêtement est de 0,1 % en moles à 2 % en moles sur la base de 100 % en moles d'un métal total, à l'exclusion de lithium, dans le premier matériau actif d'électrode positive.

8. Matériau actif d'électrode positive selon la revendication 7, dans lequel
la couche de revêtement comprend en outre du zirconium, de l'yttrium ou une combinaison de ceux-ci, facultativement dans lequel
la couche de revêtement comprend en outre de 0,05 % en moles à 1 % en moles de zirconium et/ou 0,05 % en moles à 1 % en moles d'yttrium sur la base de 100 % en moles d'un métal, à l'exclusion de lithium, dans le premier matériau actif d'électrode positive.

9. Matériau actif d'électrode positive selon la revendication 7 ou la revendication 8, dans lequel :
(i) la couche de revêtement du premier matériau actif d'électrode positive comprend une enveloppe qui entoure continuellement la surface de chacune des particules secondaires; et/ou
(ii) la couche de revêtement du premier matériau actif d'électrode positive présente une épaisseur de 30 nm à 500 nm ; et/ou
(iii) le premier matériau actif d'électrode positive comprend en outre une portion de revêtement de joint de grain contenant de l'aluminium sur la surface des particules primaires à l'intérieur de chacune des particules secondaires.

10. Matériau actif d'électrode positive selon l'une quelconque des revendications 1 à 9, dans lequel
le deuxième matériau actif d'électrode positive comprend en outre une couche de revêtement contenant de l'aluminium sur la surface de la particule individuelle, et
une teneur en aluminium de la couche de revêtement est de 0,1 % en moles à 2 % en moles sur la base de 100 % en moles d'un métal total, à l'exclusion de lithium, dans le deuxième matériau actif d'électrode positive.

11. Matériau actif d'électrode positive selon la revendication 10, dans lequel :
(i) la couche de revêtement du deuxième matériau actif d'électrode positive comprend une enveloppe qui entoure continuellement la surface de chacune des particules individuelles ; et/ou
(ii) une épaisseur de la couche de revêtement du deuxième matériau actif d'électrode positive est de 30 nm à 500 nm ; et/ou
(iii) la couche de revêtement du deuxième matériau actif d'électrode positive comprend en outre de l'yttrium, et
une teneur en yttrium de la couche de revêtement est de 0,1 % en moles à 1 % en moles sur la base de 100 % en moles d'un métal total, à l'exclusion de lithium, dans le deuxième matériau actif d'électrode positive, facultativement dans lequel :
dans la couche de revêtement du deuxième matériau actif d'électrode positive,
l'aluminium comprend un film continu et l'yttrium comprend des îlots ; ou
le deuxième matériau actif d'électrode positive comprend une première couche de revêtement sur la surface de la particule individuelle et contenant de l'aluminium, et une seconde couche de revêtement sur la première couche de revêtement et contenant de l'yttrium.

12. Matériau actif d'électrode positive selon l'une quelconque des revendications 1 à 11, dans lequel
le phosphate de métal de transition de lithium du troisième matériau actif d'électrode positive comprend du phosphate de fer lithié, du phosphate de fer manganèse lithié, du phosphate de manganèse lithié, du phosphate de titane lithié ou une combinaison de ceux-ci.

13. Matériau actif d'électrode positive selon l'une quelconque des revendications 1 à 11, dans lequel :
(i) le phosphate de métal de transition de lithium du troisième matériau actif d'électrode positive est représenté par la formule chimique 3, la formule chimique 4, la formule chimique 5, la formule chimique 6 ou la formule chimique 7 :
Formule chimique 3 Liₐ₃Fe₍₁₋ₓ₃₎M³ₓ₃PO₄,
dans la formule chimique 3, 0,90≤a3≤1,5, 0≤x3≤0,4 et M³ est Al, Ca, Ce, Cr, Cu, La, Mg, Mo, Nb, Ni, Sn, Sr, V, W, Y, Zn, Zr, ou une combinaison de ceux-ci,
Formule chimique 4 Lia₄Mn_{X4}Fe_{(1-x4-y4)}M⁴_{y4}PO₄,
dans la formule chimique 4, 0,90≤a4≤1,5, 0,1≤x4≤0,9, 0≤y4≤0,4 et M⁴ est Al, Ca, Ce, Cr, Cu, La, Mg, Mo, Nb, Ni, Sn, Sr, V, W, Y, Zn, Zr, ou une combinaison de ceux-ci,
Formule chimique 5 Liₐ₅Mn₍₁₋ₓ₅₎M⁵ₓ₅PO₄,
dans la formule chimique 5, 0,90≤a5≤1,5, 0≤x5≤0,4 et M⁵ est Al, Ca, Ce, Cr, Cu, La, Mg, Mo, Nb, Ni, Sn, Sr, V, W, Y, Zn, Zr, ou une combinaison de ceux-ci,
Formule chimique 6 Lia₆Ti₍₂₋ₓ₆₎M⁶ₓ₆(PO₄)₃,
dans la formule chimique 6, 0,90≤a6≤1,5, 0≤x6≤0,4 et M⁶ est Al, Ca, Ce, Cr, Cu, La, Mg, Mo, Nb, Ni, Sn, Sr, V, W, Y, Zn, Zr, ou une combinaison de ceux-ci,
Formule chimique 7 Liₐ₇Ti₍₁₋ₓ₇₎M⁷ₓ₇PO₅,
dans la formule chimique 7, 0,90≤a7≤1,5, 0≤x7≤0,4 et M⁷ est Al, Ca, Ce, Cr, Cu, La, Mg, Mo, Nb, Ni, Sn, Sr, V, W, Y, Zn, Zr, ou une combinaison de ceux-ci ; ou
(ii) le phosphate de métal de transition de lithium du troisième matériau actif d'électrode positive comprend LiFePO₄, LiMn_{0,7}Fe_{0,3}PO₄, LiMn_{0,6}Fe_{0,4}PO₄, LiMn_{0,5}Fe_{0,5}PO₄, LiMn_{0,4}Fe_{0,6}PO₄, LiMn_{0,3}Fe_{0,7}PO₄, LiMnPO₄, LiTiPO₅, LiTi₂(PO₄)₃, ou une combinaison de ceux-ci.

14. Électrode positive comprenant
un collecteur de courant d'électrode positive ; et
une couche de matériau actif d'électrode positive sur le collecteur de courant d'électrode positive,
dans lequel la couche de matériau actif d'électrode positive comprend le matériau actif d'électrode positive tel que revendiqué selon l'une quelconque des revendications 1 à 13, facultativement dans lequel
la couche de matériau actif d'électrode positive présente une densité de 3,4 g/cc à 3,7 g/cc.

15. Batterie au lithium rechargeable, comprenant
l'électrode positive selon la revendication 14,
une électrode négative, et
un électrolyte.
